# EUROPEAN PATENT APPLICATION

(11) **EP 4 804 676 A1**
(43) Date of publication of application: **09.09.2026**
(21) Application number: 24896518.8
(22) Date of filing: 26.11.2024
(51) Int. Cl.: H04W 72/0446

(54) **COMMUNICATION METHOD AND COMMUNICATION APPARATUS**

(30) Priority: 28.11.2023 CN 202311623623; 09.05.2024 CN 202410574411
(71) Applicant: Huawei Technologies Co., Ltd., Shenzhen, Guangdong 518129 (CN)
(72) Inventor: LI, Jie, Shenzhen, Guangdong 518129 (CN); ZENG, Yu, Shenzhen, Guangdong 518129 (CN); CHEN, Jun, Shenzhen, Guangdong 518129 (CN)
(74) Representative: Grünecker Patent- und Rechtsanwälte PartG mbB
(86) International application number: PCT/CN2024/134499
(87) International publication number: WO 2025/113430

(57) **Abstract**

This application provides a communication method and a communication apparatus. The communication method includes: receiving first information from a network device, where the first information includes a first parameter, the first parameter includes at least one of first duration or a first area, the first duration is duration within which a terminal device is expected to collect data, and the first area is an area in which the terminal device is expected to collect data; and sending first data, where the first data is a part or all of data collected by the terminal device based on the first parameter. Based on the method, the terminal device can collect data based on the first information, thereby enabling multi-time and multi-sample recording and reporting for Al-related data collection.

## Description

This application claims priorities to Chinese Patent Application No. 202311623623.X filed with the China National Intellectual Property Administration on November 28, 2023 and entitled "COMMUNICATION METHOD AND COMMUNICATION APPARATUS", and to Chinese Patent Application No. 202410574411.5 filed with the China National Intellectual Property Administration on May 9, 2024 and entitled "COMMUNICATION METHOD AND COMMUNICATION APPARATUS", which are incorporated herein by reference in their entireties.

### TECHNICAL FIELD

This application relates to the communication field, and more specifically, to a communication method and a communication apparatus.

### BACKGROUND

Artificial intelligence (artificial intelligence, AI) is a technology of performing complex computing by simulating a human brain. With the improvement of data storage and computing capabilities, the 3rd generation partnership project (3rd generation partnership project, 3GPP) proposes to apply AI to wireless communication networks to improve network performance and user experience. For example, AI can be applied to scenarios such as network energy saving, load balancing, and mobility optimization.

A large amount of data needs to be collected for training of an AI model. However, in an immediate minimization of drive tests (Immediate Minimization of Drive Tests, MDT) technology applicable to user equipment (user equipment, UE) in a connected state, the UE reports data to a network immediately upon collection. As a result, the UE cannot support multi-time and multi-sample recording for AI-related data collection, and frequent reporting of the UE increases signaling overheads.

Therefore, how to enable, by using an additional method, the UE in the connected state to support multi-time and multi-sample recording and reporting for AI-related data collection is an urgent problem to be resolved currently.

### SUMMARY

This application provides a communication method and a communication apparatus, to support a terminal device in multi-time and multi-sample recording and reporting for AI-related data collection.

According to a first aspect, a communication method is provided, including: receiving first information from a network device, where the first information includes a first parameter, the first parameter includes at least one of first duration or a first area, the first duration is duration within which a terminal device is expected to collect data, and the first area is an area in which the terminal device is expected to collect data; and sending first data, where the first data is a part or all of data collected by the terminal device based on the first parameter.

The solution in the first aspect may be performed by the terminal device, or may be performed by a chip, an integrated circuit, or other components configured to perform a function of the terminal device. For ease of description, the following uses the terminal device as an example for description.

Specifically, the terminal device may receive the first information from the network device, and the first information is used to configure the first parameter for the terminal device to collect data. Correspondingly, the terminal device collects data based on the first parameter. When the first parameter includes the first duration, after collecting data within the first duration, the terminal device needs to send the collected data to the network device. When the first parameter includes the first area, after collecting data in the first area, the terminal device needs to send the collected data to the network device. In the foregoing solution, the network device may configure the first parameter for the terminal device, so that the terminal device collects data based on the first parameter, enabling multi-time and multi-sample recording and reporting for AI-related data collection.

It should be understood that a specific operation of collecting data by the terminal device corresponds to a specific use case of an AI model that the network device expects to train. This is not limited in this application. For example, that the terminal device collects data may be understood as that the terminal device performs channel measurement by using a channel state information-reference signal (Channel State Information-Reference Signal, CSI-RS), or the terminal device performs beam scanning. This is not limited in embodiments of this application.

It should be understood that content of data collection performed by the terminal device is not limited in embodiments of this application. For example, the content of data collection performed by the terminal device may include one or more of layer 1-reference signal received power (L1-Reference Signal Received Power, L1-RSRP), layer 3-reference signal received power (L3-RSRP), L1-reference signal received quality (Reference Signal Received Quality, RSRQ), an L1-signal to interference plus noise ratio (Signal to Interference plus Noise Ratio, SINR), a signal to interference plus noise ratio (SINR), a beam identifier (beam-ID), phase information of a reference signal, time information of the reference signal, power information of the reference signal, location information of data collection, or pairing information of time and power.

It should be understood that the content of collection performed by the terminal device may be indicated by using the first information, or may be indicated by using separate configuration information. This is not limited in embodiments of this application.

It should be understood that the first duration may be understood as a time within which the terminal device continuously collects data after receiving the first information.

It should be understood that the area may be a cell, a tracking area (Tracking Area, TA), or a geographical location range (for example, a longitude and latitude range). This is not limited in embodiments of this application.

In this embodiment of this application, an example in which the area is a cell is used for description. In other words, the first area may include one or more cells. The first area may include a plurality of consecutive cells, or the first area may include a plurality of non-consecutive cells. This is not limited in embodiments of this application.

It should be understood that when the first area includes a plurality of consecutive cells, the network device may indicate the first area by indicating a start cell and an end cell in the plurality of consecutive cells.

It should be understood that a specific cell indication manner is not limited in embodiments of this application.

For example, the network device may indicate a cell in the first area by using a cell global identifier (Cell Global Identifier, CGI).

For example, the network device may indicate a cell in the first area by using a physical cell identifier (Physical Cell Identifier, PCI).

With reference to the first aspect, in some implementations of the first aspect, the first data is data collected by the terminal device in a connected state.

With reference to the first aspect, in some implementations of the first aspect, the first information further includes first indication information, and the first indication information indicates the terminal device to collect data in an idle state and/or an inactive state based on the first parameter.

In this implementation, the first data includes data collected by the terminal device in at least one of the connected state, the idle state, or the inactive state.

Based on the foregoing solution, the terminal device can collect data in the idle state or the inactive state based on the first parameter, and report the data to the network device after entering the connected state, so that flexibility of data collection can be improved.

With reference to the first aspect, in some implementations of the first aspect, the first parameter further includes at least one of a first time interval or a first threshold, the first time interval is a time interval at which the terminal device collects data, and the first threshold is an upper limit of a quantity of times of collecting data by the terminal device.

Based on the foregoing solution, the first parameter configured by the network device for the terminal device may further include at least one of the first time interval or the first threshold, to reduce energy consumption of the terminal device in data collection.

With reference to the first aspect, in some implementations of the first aspect, the first information further includes at least one of a second threshold or second duration; and the sending the first data includes: sending the first data when a data amount of the data collected by the terminal device based on the first parameter is greater than the second threshold; and/or sending the first data when duration within which the terminal device collects data based on the first parameter is greater than the second duration.

It should be understood that the second threshold is an upper limit of an amount of data obtained (or stored) by the terminal device through data collection based on the first parameter, and the second duration is maximum duration within which the terminal device collects data based on the first parameter.

It is easy to understand that when the amount of data obtained by the terminal device based on the first parameter reaches the second threshold, the terminal device stops collecting data and reports data. A specific value of the second threshold is not limited in this application.

For example, the second threshold is 2000 bytes. To be specific, when the data amount of data collected based on the first parameter reaches 2000 bytes, the terminal device stops collecting data.

For example, the second threshold is a maximum packet data convergence protocol (Packet Data Convergence Protocol, PDCP) service data unit (service data unit, SDU) size, which is 9000 bytes in an NR system. To be specific, when the data amount of data collected based on the first parameter reaches the maximum PDCP SDU length, the terminal device stops collecting data.

It is easy to understand that when the duration within which the terminal device collects data based on the first parameter reaches the second duration, the terminal device stops collecting data, and performs a subsequent step to report data.

It should be understood that a specific value of the second duration and a value relationship between the second duration and the first duration are not limited in embodiments of this application.

For example, if the second duration is greater than the first duration, after collecting data based on the first duration, the terminal device performs a subsequent step when the second duration expires.

For example, if the second duration is equal to the first duration, the terminal device performs a subsequent step immediately after collecting data based on the first duration.

In a possible implementation, the second duration may be indicated by using a first timer. A start moment of the first timer is not limited in embodiments of this application.

For example rather than limitation, the start moment of the first timer may be a moment at which the terminal device collects data by using the first parameter.

For example rather than limitation, the start moment of the first timer may be a moment at which the terminal device stores a data set collected based on the first parameter.

It should be understood that if the network device sends, before the second duration ends, request information to the terminal device to request data collected by the terminal device based on the first parameter, the terminal device may report, before the moment in response to the request information, the data collected based on the first parameter, instead of reporting the collected data after the second duration ends.

Based on the foregoing solution, the first information configured by the network device for the terminal device may further include a reporting trigger condition such as the second duration or the second threshold. When data collected by the terminal device based on the first parameter meets the reporting trigger condition, the terminal device reports the collected data to the network device, thereby enabling multi-time and multi-sample recording and reporting for AI-related data collection.

With reference to the first aspect, in some implementations of the first aspect, the first information further includes a reporting interval and a quantity of reporting times, the reporting interval is an interval of time at which the terminal device is expected to report collected data, the quantity of reporting times is a quantity of times that the terminal device is expected to report collected data, and the sending the first data includes: The terminal device sends the first data based on the reporting interval and the quantity of reporting times.

With reference to the first aspect, in some implementations of the first aspect, the first information may include one of the second threshold and the second duration, the reporting interval, and the quantity of reporting times. In other words, after the trigger condition is met, the terminal device may periodically report, to the network device, data collected based on the first parameter. Specifically, when the amount of the data obtained by the terminal device based on the first parameter reaches the second threshold, or when the duration within which the terminal device collects data based on the first parameter reaches the second duration, the terminal device periodically reports the collected data based on the reporting interval. For a specific implementation, refer to the foregoing descriptions. Details are not described herein again.

With reference to the first aspect, in some implementations of the first aspect, the first parameter further includes at least one of a height range or a speed range within which the terminal device is expected to collect data.

It should be understood that the height range may be understood as a height range within which the terminal device is located, that is, the network device expects the terminal device to collect data when the terminal device is within the height range.

It should be understood that the speed range may be understood as a range of a moving speed of the terminal device, that is, the network device expects the terminal device to collect data when the moving speed of the terminal device is within the speed range.

Based on the foregoing solution, the first parameter configured by the network device for the terminal device may further include at least one of the height range or the speed range of the terminal device, so that the terminal device collects data when the terminal device is within the height range or the speed range, thereby improving pertinence of the collected data.

With reference to the first aspect, in some implementations of the first aspect, before the sending the first data, the method further includes: sending second information, where the second information indicates that the data collected by the terminal device based on the first parameter is in an available state; and receiving third information, where the third information is used to request the terminal device to send data collected based on the first parameter; and the sending the first data includes: sending the first data based on the third information.

Based on the foregoing solution, the terminal device sends the second information to notify the network device that the terminal device completes data collection based on the first parameter, and reports, based on the third information sent by the network device, the data collected based on the first parameter, thereby improving efficiency of data reporting.

With reference to the first aspect, in some implementations of the first aspect, the second information further indicates the data amount of the data collected by the terminal device based on the first parameter; and/or the data collected by the terminal device based on the first parameter includes at least one data set, the second information further indicates a second parameter, and the second parameter includes at least one of the following: a collection time range corresponding to each of the at least one data set, a collection area corresponding to each of the at least one data set, a collection height range corresponding to each of the at least one data set, or a collection speed range corresponding to each of the at least one data set.

Based on the foregoing solution, the second information sent by the terminal device to the network device may include the amount of the data collected based on the first parameter, and/or a second parameter of each data set collected based on the first parameter, to indicate an applicable condition of each data set, so that the network device can determine, based on the applicable condition of each data set, a data set that needs to be reported, thereby improving efficiency of data reporting.

With reference to the first aspect, in some implementations of the first aspect, the third information includes a first identifier, and the first identifier indicates a data set that the terminal is expected to report.

With reference to the first aspect, in some implementations of the first aspect, the first identifier includes at least one of the following: an identifier of the data set that the terminal device is expected to report, an identifier of a collection area corresponding to the data set that the terminal device is expected to report, an identifier of a collection time range corresponding to the data set that the terminal device is expected to report, an identifier of a collection height range corresponding to the data set that the terminal device is expected to report, or an identifier of a collection speed range corresponding to the data set that the terminal device is expected to report.

Based on the foregoing solution, the third information sent by the network device to the terminal device may include the first identifier, to indicate the data set that the network device expects the terminal device to report, so that the terminal device can preferentially report the data set indicated by the first identifier, thereby improving efficiency of data reporting.

With reference to the first aspect, in some implementations of the first aspect, the third information includes a first condition, the first data is all or a part of data meeting the first condition in the data collected by the terminal device based on the first parameter, and the first condition includes one of the following: a collection time range corresponding to data expected to be reported, a collection area corresponding to the data expected to be reported, a height range corresponding to the data expected to be reported, a speed range corresponding to the data expected to be reported, and a data amount of the data expected to be reported.

It should be understood that in this implementation, the second information may not include the second parameter, and the first data is all or a part of data meeting the first condition.

Based on the foregoing solution, the third information sent by the network device to the terminal device may include the first condition, to indicate a data set that the network device expects the terminal device to report, so that the terminal device can preferentially report a data set meeting the first condition, thereby improving efficiency of data reporting.

With reference to the first aspect, in some implementations of the first aspect, the method further includes: sending fourth information, where the fourth information indicates that second data is in an available state, and the second data is a part or all of data other than the first data in the data collected by the terminal device based on the first parameter.

It should be understood that the fourth information may further include a second parameter corresponding to each data set other than the first data in the data collected by the terminal device based on the first parameter. Details are not described herein again.

It should be understood that an occasion at which the terminal device sends the fourth information is not limited in embodiments of this application. In an example, the terminal device may send the fourth information when sending the first data. In another example, the terminal device may send the fourth information after sending the first data. This is not limited in embodiments of this application.

Based on the foregoing solution, the terminal device may send the fourth information to the network device, to indicate that the second data is in an available state, where the second data includes all or a part of data other than the first data in the data collected by the terminal device based on the first parameter, thereby improving flexibility of data reporting.

With reference to the first aspect, in some implementations of the first aspect, the first data includes at least one of the following: layer 1-reference signal received power, layer 3-reference signal received power, layer 1-reference signal received quality, a layer 1-signal to interference plus noise ratio, a signal to interference plus noise ratio, a beam identifier, phase information of a reference signal, time information of the reference signal, power information of the reference signal, location information of data collection, pairing information of time and power, a second identifier, or a third identifier, where the second identifier indicates line-of-sight transmission or non-line-of-sight transmission, and the third identifier indicates quality of a label of the first data.

According to a second aspect, a communication method is provided, including: sending first information to a terminal device, where the first information includes a first parameter, the first parameter includes at least one of first duration or a first area, the first duration is duration within which the terminal device is expected to collect data, and the first area is an area in which the terminal device is expected to collect data; and receiving first data, where the first data is a part or all of data collected by the terminal device based on the first parameter.

The solution in the second aspect may be performed by a network device, or may be performed by a chip, an integrated circuit, or other components configured to perform a function of the network device. For ease of description, the following uses the network device as an example for description.

With reference to the second aspect, in some implementations of the second aspect, the first data is data collected by the terminal device in a connected state.

With reference to the second aspect, in some implementations of the second aspect, the first information further includes first indication information, and the first indication information indicates the terminal device to collect data in an idle state and/or an inactive state based on the first parameter.

With reference to the second aspect, in some implementations of the second aspect, the first parameter further includes at least one of a first time interval or a first threshold, the first time interval is a time interval at which the terminal device collects data, and the first threshold is an upper limit of a quantity of times of collecting data by the terminal device.

With reference to the second aspect, in some implementations of the second aspect, the first information further includes a reporting interval and a quantity of reporting times, the reporting interval is an interval of time at which the terminal device is expected to report collected data, and the quantity of reporting times is a quantity of times that the terminal device is expected to report collected data.

With reference to the second aspect, in some implementations of the second aspect, a trigger condition may include one of the second threshold and the second duration, the reporting interval, and the quantity of reporting times. In this implementation, when an amount of the data obtained by the terminal device based on the first parameter reaches the second threshold, or when duration within which the terminal device collects data based on the first parameter reaches the second duration, the terminal device reports collected data based on the reporting interval. For a specific implementation, refer to the foregoing descriptions. Details are not described herein again.

With reference to the second aspect, in some implementations of the second aspect, the first parameter further includes at least one of a height range or a speed range within which the terminal device collects data.

With reference to the second aspect, in some implementations of the second aspect, before the receiving the first data, the method further includes: receiving second information, where the second information indicates that the data collected by the terminal device based on the first parameter is in an available state; and sending third information, where the third information is used to request the terminal device to send data collected based on the first parameter.

With reference to the second aspect, in some implementations of the second aspect, the second information further indicates the data amount of the data collected by the terminal device based on the first parameter; and/or the data collected by the terminal device based on the first parameter includes at least one data set, the second information further indicates a second parameter, and the second parameter includes at least one of the following: a collection time range corresponding to each of the at least one data set, a collection area corresponding to each of the at least one data set, a collection height range corresponding to each of the at least one data set, or a collection speed range corresponding to each of the at least one data set.

With reference to the second aspect, in some implementations of the second aspect, the third information includes a first identifier, and the first identifier indicates a data set that the terminal is expected to report.

With reference to the second aspect, in some implementations of the second aspect, the first identifier includes at least one of the following: an identifier of the data set that the terminal device is expected to report, an identifier of a collection area corresponding to the data set that the terminal device is expected to report, an identifier of a collection time range corresponding to the data set that the terminal device is expected to report, an identifier of a collection height range corresponding to the data set that the terminal device is expected to report, or an identifier of a collection speed range corresponding to the data set that the terminal device is expected to report.

With reference to the second aspect, in some implementations of the second aspect, the third information includes a first condition, the first data is all or a part of data meeting the first condition in the data collected by the terminal device based on the first parameter, and the first condition includes one of the following: a collection time range corresponding to data expected to be reported, a collection area corresponding to the data expected to be reported, a height range corresponding to the data expected to be reported, a speed range corresponding to the data expected to be reported, and a data amount of the data expected to be reported.

With reference to the second aspect, in some implementations of the second aspect, the method further includes: sending fourth information, where the fourth information indicates that second data is in an available state, and the second data is a part or all of data other than the first data in the data collected by the terminal device based on the first parameter.

With reference to the second aspect, in some implementations of the second aspect, the first data includes at least one of the following: layer 1-reference signal received power, layer 3-reference signal received power, layer 1-reference signal received quality, a layer 1-signal to interference plus noise ratio, a signal to interference plus noise ratio, a beam identifier, phase information of a reference signal, time information of the reference signal, power information of the reference signal, location information of data collection, pairing information of time and power, a second identifier, or a third identifier, where the second identifier indicates line-of-sight transmission or non-line-of-sight transmission, and the third identifier indicates quality of a label of the first data.

According to a third aspect, a communication apparatus is provided. The communication apparatus may be a terminal device, or may be a device, a module, or other components configured to perform a function of the terminal device.

In a possible implementation, the communication apparatus may include modules or units in one-to-one correspondence with the methods/operations/steps/actions described in the first aspect or the ninth aspect. The modules or units may be implemented by a hardware circuit, software, or a combination of a hardware circuit and software.

According to a fourth aspect, a communication apparatus is provided. The communication apparatus may be a network device, or may be a device, a module, or other components configured to perform a function of the network device.

In a possible implementation, the communication apparatus may include modules or units in one-to-one correspondence with the methods/operations/steps/actions described in the second aspect or the tenth aspect. The modules or units may be implemented by a hardware circuit, software, or a combination of a hardware circuit and software.

According to a fifth aspect, a communication apparatus is provided, including a processor. The processor is, by executing a computer program or instructions or using a logic circuit, configured to enable the communication apparatus to perform the method according to any one of the first aspect or the ninth aspect and the possible implementations of the first aspect or the ninth aspect, or enable the communication apparatus to perform the method according to any one of the second aspect or the tenth aspect and the possible implementations of the second aspect or the tenth aspect.

In a possible implementation, the communication apparatus further includes a memory. The memory is configured to store the computer program or the instructions.

In a possible implementation, the communication apparatus further includes a communication interface. The communication interface is configured to input and/or output signals.

According to a sixth aspect, a communication apparatus is provided, including a processing circuit and an input/output interface. The input/output interface is configured to input and/or output signals, and the processing circuit is configured to perform the method according to any one of the first aspect or the ninth aspect and the possible implementations of the first aspect or the ninth aspect, or the processing circuit is configured to perform the method according to any one of the second aspect or the tenth aspect and the possible implementations of the second aspect or the tenth aspect.

According to a seventh aspect, a computer-readable storage medium is provided. The computer-readable storage medium stores a computer program or instructions, and when the computer program or the instructions are run on a computer, the method according to any one of the first aspect or the ninth aspect and the possible implementations of the first aspect or the ninth aspect is performed, or the method according to any one of the second aspect or the tenth aspect and the possible implementations of the second aspect or the tenth aspect is performed.

According to an eighth aspect, a computer program product is provided, including instructions. When the instructions are run on a computer, the method according to any one of the first aspect or the ninth aspect and the possible implementations of the first aspect or the ninth aspect is performed, or the method according to any one of the second aspect or the tenth aspect and the possible implementations of the second aspect or the tenth aspect is performed.

According to a ninth aspect, a communication method is provided, including: receiving first information from a network device, where the first information includes a first parameter, the first parameter includes a first time interval and content of data collection performed by a terminal device, and the first time interval is a time interval at which the terminal device collects data; and sending first data, where the first data is a part or all of data collected by the terminal device based on the first parameter.

The solution in the ninth aspect may be performed by the terminal device, or may be performed by a chip, an integrated circuit, or other components configured to perform a function of the terminal device. For ease of description, the following uses the terminal device as an example for description.

With reference to the ninth aspect, in some implementations of the ninth aspect, the first data is data collected by the terminal device in a connected state.

With reference to the ninth aspect, in some implementations of the ninth aspect, the content of data collection performed by the terminal device includes: at least one of layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, or pairing information of time and power.

With reference to the ninth aspect, in some implementations of the ninth aspect, the first parameter further includes a first area and/or a first threshold, the first area is an area in which the terminal device is expected to collect data, and the first threshold is an upper limit of a quantity of times of collecting data by the terminal device.

With reference to the ninth aspect, in some implementations of the ninth aspect, the first information further includes at least one of a second threshold or second duration; and the sending the first data includes: sending the first data when a data amount of the data collected by the terminal device based on the first parameter is greater than the second threshold; and/or sending the first data when duration within which the terminal device collects data based on the first parameter is greater than the second duration.

With reference to the ninth aspect, in some implementations of the ninth aspect, when the second threshold is less than or equal to an upper limit of a data buffer size supported by the terminal device, the sending the first data includes: sending the first data when a difference between the data amount of the data collected by the terminal device based on the first parameter and the upper limit of the data buffer size supported by the terminal device is less than a third threshold; or sending fifth information, where the fifth information indicates the upper limit of the data buffer size supported by the terminal device.

With reference to the ninth aspect, in some implementations of the ninth aspect, the first information further includes a reporting interval and a quantity of reporting times, the reporting interval is an interval of time at which the terminal device is expected to report collected data, the quantity of reporting times is a quantity of times that the terminal device is expected to report collected data, and the sending the first data includes: The terminal device sends the first data based on the reporting interval and the quantity of reporting times.

With reference to the ninth aspect, in some implementations of the ninth aspect, the first parameter further includes at least one of a height range or a speed range within which the terminal device is expected to collect data.

With reference to the ninth aspect, in some implementations of the ninth aspect, before the receiving the first information from the network device, the method further includes: receiving sixth information, where the sixth information is used to request the upper limit of the data buffer size supported by the terminal device; and sending seventh information, where the seventh information indicates the upper limit of the data buffer size supported by the terminal device.

With reference to the ninth aspect, in some implementations of the ninth aspect, before the sending the first data, the method further includes: sending second information, where the second information indicates that the data collected by the terminal device based on the first parameter is in an available state; and receiving third information, where the third information is used to request the terminal device to send data collected based on the first parameter; and the sending the first data includes: sending the first data based on the third information.

With reference to the ninth aspect, in some implementations of the ninth aspect, the second information further indicates the data amount of the data collected by the terminal device based on the first parameter; and/or the data collected by the terminal device based on the first parameter includes at least one data set, the second information further indicates a second parameter, and the second parameter includes at least one of the following: a collection time range corresponding to each of the at least one data set, a collection area corresponding to each of the at least one data set, a collection height range corresponding to each of the at least one data set, or a collection speed range corresponding to each of the at least one data set.

With reference to the ninth aspect, in some implementations of the ninth aspect, the third information includes a first identifier, and the first identifier indicates a data set that the terminal is expected to report.

With reference to the ninth aspect, in some implementations of the ninth aspect, the first identifier includes at least one of the following: an identifier of the data set that the terminal device is expected to report, an identifier of a collection area corresponding to the data set that the terminal device is expected to report, an identifier of a collection time range corresponding to the data set that the terminal device is expected to report, an identifier of a collection height range corresponding to the data set that the terminal device is expected to report, or an identifier of a collection speed range corresponding to the data set that the terminal device is expected to report.

With reference to the ninth aspect, in some implementations of the ninth aspect, the third information includes a first condition, the first data is all or a part of data meeting the first condition in the data collected by the terminal device based on the first parameter, and the first condition includes one of the following: a collection time range corresponding to expected data, a collection area corresponding to the expected data, a height range corresponding to the expected data, or a speed range corresponding to the expected data.

With reference to the ninth aspect, in some implementations of the ninth aspect, the method further includes: sending fourth information, where the fourth information indicates that second data is in an available state, and the second data is a part or all of data other than the first data in the data collected by the terminal device based on the first parameter.

With reference to the ninth aspect, in some implementations of the ninth aspect, the first data includes at least one of the following: layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, pairing information of time and power, a second identifier, or a third identifier, where the second identifier indicates line-of-sight transmission or non-line-of-sight transmission, and the third identifier indicates quality of a label of the first data.

According to a tenth aspect, a communication method is provided, including: sending first information to a terminal device, where the first information includes a first parameter, the first parameter includes a first time interval and content of data collection performed by the terminal device, and the first time interval is a time interval at which the terminal device collects data; and receiving first data, where the first data is a part or all of data collected by the terminal device based on the first parameter.

The solution in the tenth aspect may be performed by a network device, or may be performed by a chip, an integrated circuit, or other components configured to perform a function of the network device. For ease of description, the following uses the network device as an example for description.

With reference to the tenth aspect, in some implementations of the tenth aspect, the first data is data collected by the terminal device in a connected state.

With reference to the tenth aspect, in some implementations of the tenth aspect, the content of data collection performed by the terminal device includes: at least one of layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, or pairing information of time and power.

With reference to the tenth aspect, in some implementations of the tenth aspect, the first parameter further includes a first area and/or a first threshold, the first area is an area in which the terminal device is expected to collect data, and the first threshold is an upper limit of a quantity of times of collecting data by the terminal device.

With reference to the tenth aspect, in some implementations of the tenth aspect, the first information further includes at least one of a second threshold or second duration, the second threshold is an upper limit of a data amount of the data collected by the terminal device based on the first parameter, and the second duration is maximum duration within which the terminal device collects data based on the first parameter.

With reference to the tenth aspect, in some implementations of the tenth aspect, the method further includes: obtaining an upper limit of a data buffer size supported by the terminal device; and determining the second threshold, where the second threshold is less than or equal to the upper limit of the data buffer size supported by the terminal device.

With reference to the tenth aspect, in some implementations of the tenth aspect, the first parameter further includes at least one of a height range or a speed range within which the terminal device collects data.

With reference to the tenth aspect, in some implementations of the tenth aspect, before the receiving the first data, the method further includes: receiving second information, where the second information indicates that the data collected by the terminal device based on the first parameter is in an available state; and sending third information, where the third information is used to request the terminal device to send data collected based on the first parameter.

With reference to the tenth aspect, in some implementations of the tenth aspect, the second information further indicates the data amount of the data collected by the terminal device based on the first parameter; and/or the data collected by the terminal device based on the first parameter includes at least one data set, the second information further indicates a second parameter, and the second parameter includes at least one of the following: a collection time range corresponding to each of the at least one data set, a collection area corresponding to each of the at least one data set, a collection height range corresponding to each of the at least one data set, or a collection speed range corresponding to each of the at least one data set.

With reference to the tenth aspect, in some implementations of the tenth aspect, the third information includes a first identifier, and the first identifier indicates a data set that the terminal is expected to report.

With reference to the tenth aspect, in some implementations of the tenth aspect, the first identifier includes at least one of the following: an identifier of a length of the data set that the terminal device is expected to report, an identifier of a collection area corresponding to the data set that the terminal device is expected to report, an identifier of a collection time range corresponding to the data set that the terminal device is expected to report, an identifier of a collection height range corresponding to the data set that the terminal device is expected to report, or an identifier of a collection speed range corresponding to the data set that the terminal device is expected to report.

With reference to the tenth aspect, in some implementations of the tenth aspect, the third information includes a first condition, the first data is all or a part of data meeting the first condition in the data collected by the terminal device based on the first parameter, and the first condition includes one of the following: a collection time range corresponding to expected data, a collection area corresponding to the expected data, a height range corresponding to the expected data, or a speed range corresponding to the expected data.

With reference to the tenth aspect, in some implementations of the tenth aspect, the method further includes: receiving fourth information, where the fourth information indicates that second data is in an available state, and the second data is data other than the first data in the data collected by the terminal device based on the first parameter.

With reference to the tenth aspect, in some implementations of the tenth aspect, the first data includes at least one of the following: layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, pairing information of time and power, a second identifier, or a third identifier, where the second identifier indicates line-of-sight transmission or non-line-of-sight transmission, and the third identifier indicates quality of a label of the first data.

For descriptions of beneficial effects of any one of the second aspect to the eighth aspect, the ninth aspect, and the tenth aspect, refer to descriptions of beneficial effects of the first aspect. Details are not described herein again.

### BRIEF DESCRIPTION OF DRAWINGS

FIG. 1 is a diagram of an application framework 100 in a communication system according to an embodiment of this application;
FIG. 2 is a diagram of a communication system 200 to which an embodiment of this application is applicable;
FIG. 3 is a diagram of a communication system 300 to which an embodiment of this application is applicable;
FIG. 4 is a diagram of an AI application framework according to an embodiment of this application;
FIG. 5 is a schematic flowchart of a communication method 500 according to an embodiment of this application;
FIG. 6 is a schematic flowchart of another communication method 600 according to an embodiment of this application;
FIG. 7 is a block diagram of a communication apparatus 1000 according to an embodiment of this application; and
FIG. 8 is a block diagram of a communication apparatus 1100 according to an embodiment of this application.

### DESCRIPTION OF EMBODIMENTS

For ease of understanding embodiments of this application, the following several points are described first.
1. In this application, unless otherwise specified, "a/the plurality of" means two or more.
2. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Numbers in this application are merely used for distinguishing for ease of description, but are not intended to limit the protection scope of this application. Sequence numbers in this application do not mean a specific execution sequence, and the execution sequence of processes should be determined based on functions and internal logic of the processes. For example, terms such as "first", "second", "third", and "fourth" and other reference numerals (if existent) in the specification, claims, and accompanying drawings of this application are intended to distinguish between similar objects, but do not necessarily describe a specific order or sequence. Data used in such a way is interchangeable in appropriate circumstances, so that embodiments described herein can be implemented in other orders than the order illustrated or described herein.
   In addition, any embodiment or design scheme described as "example" or "for example" in this application should not be explained as being more preferred or having more advantages than another embodiment or design scheme. Specifically, the words such as "example" or "for example" are used to present a related concept in a specific manner for ease of understanding.
4. The terms "include" and "have" and any other variants thereof mean to cover the non-exclusive inclusion, for example, a process, method, system, product, or device that includes a list of steps or units is not necessarily limited to those steps or units expressly listed, but may include other steps or units not expressly listed or inherent to the process, method, system, product, or device.
5. In this application, "indicate" may be understood as "enable", and "enable" may include "directly enable" and "indirectly enable". When a piece of information is described as being used to enable A, the information may directly enable A or indirectly enable A, and it does not mean that the information definitely carries A.
   Information enabled by other information is referred to as to-be-enabled information. In a specific implementation process, the to-be-enabled information may be enabled in many manners, for example but not limited to, directly enabling the to-be-enabled information, such as the to-be-enabled information or an index of the to-be-enabled information. Alternatively, the to-be-enabled information may be indirectly enabled by enabling other information, where there is an association relationship between the other information and the to-be-enabled information. Alternatively, the to-be-enabled information may have only a part enabled, while another part of the to-be-enabled information is known or agreed in advance. For example, specific information may be enabled based on a pre-agreed (for example, specified in a protocol) sequence of various pieces of information, to reduce enabling overheads to some extent. In addition, common parts of various pieces of information may be further identified and enabled together, to reduce enabling overheads caused by enabling identical information separately.
6. In this application, "preconfigure" may include "predefine", for example, define in a protocol. The "predefine" may be implemented by prestoring, in a device (for example, including various network elements), corresponding code, a corresponding table, or other related information that may be used for indication. A specific implementation thereof is not limited in this application.
7. In this application, "store" or "save" may be save in one or more memories. The one or more memories may be separately disposed, or may be integrated into an encoder, a decoder, a processor, or a communication apparatus. Alternatively, the one or more memories may be partly separately disposed, and partly integrated into a decoder, a processor, or a communication apparatus. A type of the memory may be a storage medium in any form. This is not limited.
8. In this application, a "protocol" may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited in this application.
9. Arrows or blocks shown by dashed lines in diagrams of the accompanying drawings in the specification of this application indicate optional steps or optional modules.
10. In this application, unless otherwise specified, "/" indicates an "or" relationship between associated objects. For example, A/B may indicate A or B. In this application, "and/or" merely shows an association relationship for describing associated objects and indicates that three relationships may exist. For example, A and/or B may indicate the following three cases: Only A exists, both A and B exist, and only B exists, where A and B may be singular or plural.

First, communication systems to which embodiments of this application are applicable are described by using examples.

Technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation (6th generation, 6G) mobile communication system, or a converged system of a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), and internet-of-things (internet-of-things, IoT) communication systems, or other communication systems.

A network element in the communication system may send a signal to another network element or receive a signal from another network element. The signal may include information, signaling, data, or the like. The network element may be replaced with an entity, a network entity, a device, a communication device, a communication module, a node, a communication node, a core network device, or the like. In embodiments of this application, the network element is used as an example for description. For example, the communication system may include at least one terminal device and at least one network device. The network device may send a downlink signal to the terminal device, and/or the terminal device may send an uplink signal to the network device. It may be understood that, the terminal device in embodiments of this application may be replaced with a first network element, the network device may be replaced with a second network element, and the two perform corresponding communication methods in embodiments of this application.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data, for example, a handheld device or a vehicle-mounted device having a wireless connection function. Currently, some examples of the terminal include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a wearable apparatus, a terminal device in a 5G network, a terminal device in a future evolved public land mobile network (public land mobile network, PLMN), or the like. This is not limited in embodiments of this application.

For example rather than limitation, the terminal device may alternatively be a wearable device. The wearable device may also be referred to as a wearable intelligent device, which is a general term for devices that are developed by intelligently designing everyday wearing by applying wearable technologies and can be worn, such as glasses, gloves, watches, clothing, and shoes. The wearable device is a portable device that can be directly worn on the body or integrated onto clothes or accessories of a user. The wearable device is more than a hardware device, and implements a powerful function through software support, data exchange, and cloud interaction. In a broad sense, the wearable intelligent device includes full-featured and large-sized devices that can implement all or a part of functions without depending on smartphones, for example, smart watches or smart glasses, and includes devices that focus on a specific type of application function and need to collaboratively work with other devices such as smartphones, for example, various smart bands or smart jewelry for monitoring physical signs.

In embodiments of this application, an apparatus configured to implement a function of the terminal device may be the terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete component. In embodiments of this application, an example in which the apparatus configured to implement the function of the terminal device is the terminal device is merely used for description, and constitutes no limitation on the solutions in embodiments of this application.

The network device in embodiments of this application may be a device configured to communicate with the terminal device. The network device may also be referred to as an access network device or a radio access network device. For example, the network device may be a base station or a core network element (for example, a location management function (Location Management Function, LMF) or a network element that can implement the function). The network device in embodiments of this application may be a radio access network (radio access network, RAN) node (or device) that connects the terminal device to a wireless network. The base station may cover the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that takes on a base station function in D2D, V2X, or M2M communication, a network side device in a 6G network, a device that takes on a base station function in a future communication system, or the like. The base station may support networks of a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a location of the mobile base station. In another example, the helicopter or the uncrewed aerial vehicle may be configured as a device for communicating with another base station.

In some deployments, the network device mentioned in embodiments of this application may be a device including a CU or a DU or including a CU and a DU, or a device including a CU control plane (a central unit-control plane (central unit-control plane, CU-CP)) node, a CU user plane (a central unit-user plane (central unit-user plane, CU-UP)) node, and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes each implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be the network device, or may be an apparatus that can support the network device in implementing the function, for example, a chip system, a hardware circuit, a software module, or a combination of a hardware circuit and a software module. The apparatus may be installed in the network device or used in combination with the network device. In embodiments of this application, an example in which the apparatus for implementing the function of the network device is the network device is merely used for description, and constitutes no limitation on the solutions in embodiments of this application.

The network device and/or the terminal device may be deployed on land, including an indoor device, an outdoor device, a handheld device, or a vehicle-mounted device; may be deployed on water; or may be deployed on an airplane, a balloon, or a satellite in the air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, leading to a growing variety of service requirements that need to be met. For example, the network needs to be capable of supporting an ultra-high rate, an ultra-low latency, and/or massive connections. This feature leads to increasingly complex network planning, network configuration, and/or resource scheduling. In addition, because the network has increasingly powerful functions, for example, supporting an increasingly high spectrum, supporting a high-order multiple-input multiple-output (multiple-input multiple-output, MIMO) technology, and supporting new technologies such as beamforming and/or beam management, network energy saving becomes a hot research topic. These new requirements, scenarios, and features bring unprecedented challenges to network planning, operation and maintenance, and efficient operation. To meet the challenges, an artificial intelligence technology may be introduced into the wireless communication network, to implement network intelligence.

To support the AI technology in the wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, in a host or a cloud server of an over the top (over the top, OTT) system. The AI node may communicate with another device in the communication system. For example, the another device may be one or more of the following: a network device, a terminal device, a network element of a core network, or the like.

It may be understood that, a quantity of AI nodes is not limited in embodiments of this application. For example, when there are a plurality of AI nodes, the plurality of AI nodes may be classified based on functions. For example, different AI nodes are responsible for different functions.

It may be further understood that the AI nodes may be devices independent of each other, or may be integrated into a same device to implement different functions, or may be network elements in hardware devices, or may be software functions running on dedicated hardware, or may be virtualized functions instantiated on a platform (for example, a cloud platform). Specific forms of the AI nodes are not limited in this application. The AI node may be an AI network element or an AI module.

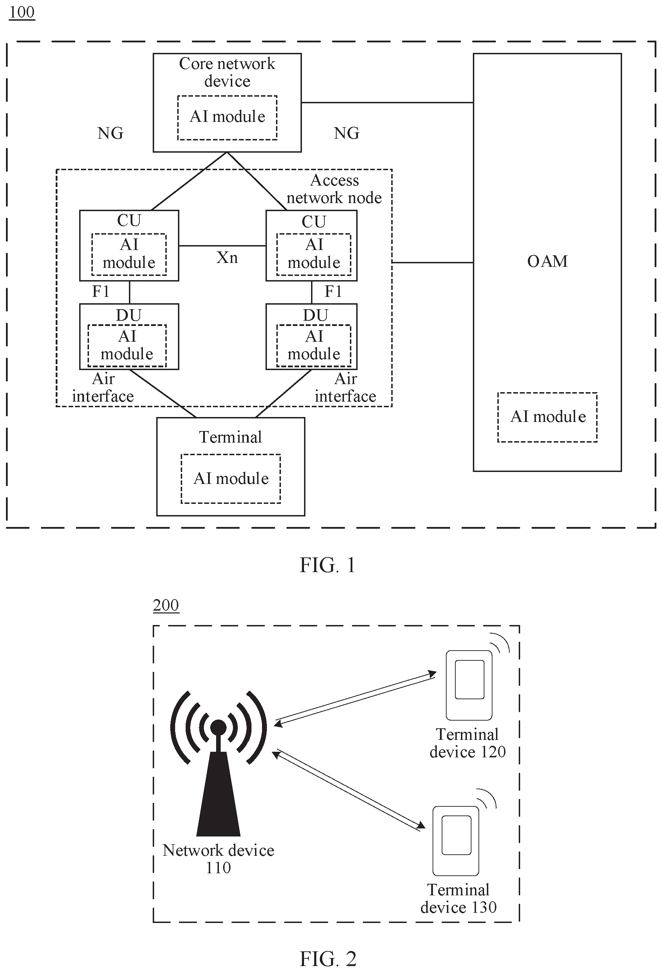

FIG. 1 is a diagram of an application framework 100 in a communication system according to an embodiment of this application. As shown in FIG. 1, network elements in the communication system are connected through an interface (for example, NG or Xn) or an air interface. One or more AI modules (for clarity, FIG. 1 shows only one AI module) are disposed in one or more of these network element nodes, such as a core network device, an access network node (RAN node), a terminal, or operation, administration, and maintenance (operation, administration, and maintenance, OAM). The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. Models of the AI modules are configured based on different parameters, and the AI modules may implement different functions. The models of the AI modules may be configured based on one or more of the following parameters: a structural parameter (for example, at least one of a quantity of layers of a neural network, a width of the neural network, a connection relationship between layers, a weight of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of the neural network.

One AI module may have one or more models. One piece of output may be obtained through inference based on one model, and the output includes one or more parameters. Learning processes, training processes, or inference processes of different models may be deployed on different nodes or devices, or may be deployed on a same node or device.

FIG. 2 is a diagram of a communication system 200 to which an embodiment of this application is applicable. As shown in FIG. 2, the communication system 200 may include at least one network device, for example, a network device 110. The communication system 100 may further include at least one terminal device, for example, a terminal device 120 and a terminal device 130. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

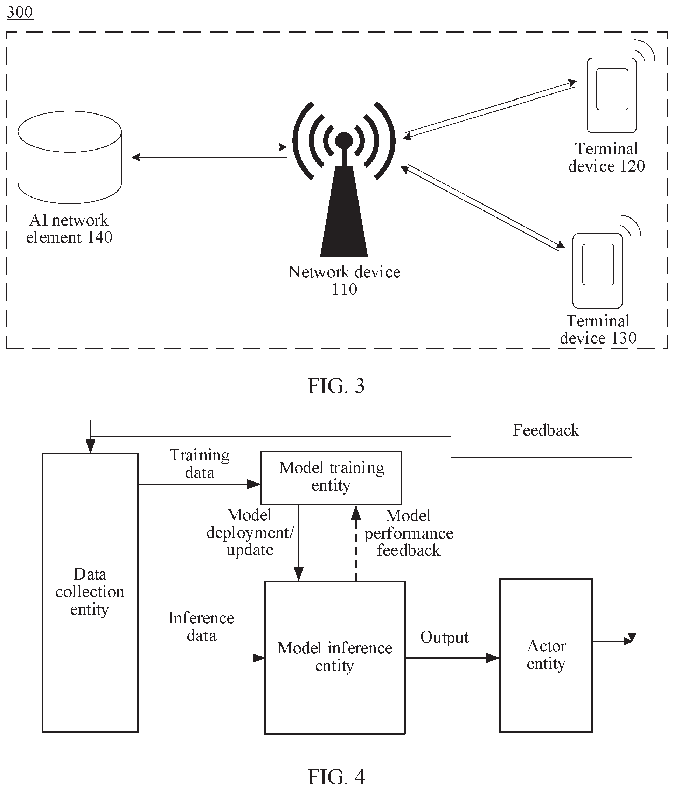

FIG. 3 is a diagram of a communication system 300 to which an embodiment of this application is applicable. Compared with the communication system 200, the communication system 300 further includes an AI network element 140. The AI network element 140 is configured to perform an AI-related operation, for example, constructing a training data set or training an AI model.

In a possible implementation, the network device 110 may send data related to training of the AI model to the AI network element 140, and the AI network element 140 constructs the training data set and trains the AI model. For example, the data related to training of the AI model may include data reported by a terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result about the model, or the like. For example, the trained AI model may have a part deployed on the network device 110, and another part deployed on the terminal device. Alternatively, the trained AI model may be deployed on the network device 110. Alternatively, the trained AI model may be deployed on the terminal device.

FIG. 3 merely shows that the AI network element 140 is directly connected to the network device 110 as an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in this application.

The AI network element 140 may alternatively be disposed as a module in a network device and/or a terminal device, for example, disposed in the network device 110 or the terminal device shown in FIG. 2.

It should be noted that, FIG. 2 and FIG. 3 are merely simplified diagrams of examples for ease of understanding. For example, the communication system may further include another device, for example, may further include a wireless relay device and/or a wireless backhaul device, which are/is not shown in FIG. 2 or FIG. 3. In actual application, the communication system may include a plurality of network devices (for example, the network device 110 and a network device 150 (not shown in FIG. 2)), and may include a plurality of terminal devices. Quantities of network devices and terminal devices included in the communication system are not limited in this application.

FIG. 4 is a diagram of an AI application framework according to an embodiment of this application. As shown in FIG. 4, the AI application framework includes a data collection (data collection) entity, a model training (model training) entity, a model inference (model inference) entity, and an actor (Actor) entity.

The model training entity and the model inference entity are examples of AI entities. The data collection module may store data input from a gNB, a gNB-CU, a gNB-DU, UE, or other management entities, as a database for AI model training and data analysis and inference. The model training entity provides an optimal AI model by analyzing training data (training data) provided by the data collection entity. The model inference entity uses the AI model and provides AI-based reasonable prediction for network operation or guides policy adjustment of a network based on data provided by the data collection entity. Related policy adjustment is centrally planned by the actor entity, and is sent to a plurality of network entities for operation. In addition, after a related policy is applied, specific performance of the network is input into the database again for storage.

For ease of understanding of embodiments of this application, several basic concepts in embodiments of this application are briefly described. It should be understood that basic concepts described below are briefly described by using basic concepts specified in a current protocol as an example, but embodiments of this application are not limited to being applied only to a currently existing system. Therefore, all names used when the currently existing system is used as an example for description are functional descriptions, which merely indicate functions, and may be correspondingly expanded to another system, for example, a 6G system or a future communication system, and specific names are not limited.

### 1. AI-based use case (use case)

The 3rd generation partnership project (3rd generation partnership project, 3GPP) introduces a plurality of AI application scenarios on a RAN side. AI application on the RAN side includes but is not limited to the following application scenarios: energy saving (energy saving), load balancing (load balancing), mobility optimization (mobility optimization), channel state information-reference signal (channel state information-reference signal, CSI-RS) feedback enhancement, beam management enhancement (beam management enhancement, BME), positioning enhancement, and other scenarios. These application scenarios may also be referred to as AI use cases (use cases).

For example, AI may be applied to an energy saving scenario. To be specific, a base station collects load, energy consumption, and energy efficiency information of the base station and a neighboring cell, trajectory information and measurement results of UE, and the like, predicts a load trend of the base station, and takes an appropriate energy saving measure in a timely manner with reference to a cell usage, a key performance indicator (Key Performance Indicator, KPI) requirement, or the like without affecting network coverage or user access. A simplest energy saving policy includes directly deactivating a cell. Other energy saving policies include carrier shutdown, channel shutdown, slot shutdown, transmit power reduction, and the like. A complex energy saving policy further includes a combination of the foregoing energy saving measures. When the network coverage is affected or an access or service requirement of the UE cannot be met, the base station needs to adjust a current energy saving policy or directly restore to a normal operating state, and consider re-predicting the load or changing a used AI model for re-inference.

For example, AI may be applied to a load balancing scenario. To be specific, a base station collects load, energy consumption, and energy efficiency information of the base station and a neighboring cell, trajectory information and measurement results of UE, and the like, predicts a load trend of the base station, and appropriately selects some UEs and hands over them to the neighboring cell or receive UEs from the neighboring cell with reference to cell usage, KPI requirements, or the like, so that load levels of base stations in an entire network slice are close, to reduce cases in which some base stations are overloaded and a normal service is affected while some base stations have idle resources. However, the prediction is not 100% accurate. As a result, inappropriate UE may be selected or a target cell for handover is inappropriate, leading to a handover failure or affecting a UE service. Alternatively, a load balancing effect is poor due to inaccurate load prediction. Alternatively, an original load balancing policy is no longer applicable due to a temporary abnormal change of the load. In this case, the base station needs to exit or modify a current load balancing policy, and consider re-predicting the load or changing a used AI model for re-inference.

For example, AI may be applied to a mobility optimization scenario. To be specific, a base station collects historical trajectory information of UE, predicts a future trajectory of the UE with reference to measurement information of the UE, determines, in advance based on the predicted trajectory, whether to hand over the UE, delivers a handover configuration in advance, and notifies a target cell to prepare an access resource, to reduce a delay in a UE handover process and a probability of a handover or access failure. However, the trajectory prediction is not 100% accurate. As a result, when the predicted trajectory is incorrect, the UE handover fails, and a service is interrupted. In this case, the base station needs to consider performing model retraining and re-inference with reference to an abnormal case, or changing a model, to avoid subsequent occurrence of a similar abnormal case on the UE.

For example, AI may be used for CSI feedback enhancement. CSI is a channel attribute of a communication link. UE reports downlink channel quality information to a gNB, so that the base station selects a more appropriate modulation and coding scheme (Modulation and Coding Scheme, MCS) for the UE. According to the latest progress of the RAN1 meeting, two AI-based sub use cases, namely, CSI compression and CSI prediction (with a low priority) have been approved. CSI compression is based on a two-sided model (where an encoder (and a quantizer) on a UE side is configured to compress CSI, and a decoder (and a dequantizer) on a gNB side is configured to decompress the CSI; and the AI-based encoder and decoder may be implemented by using an AI model such as a convolutional neural network (Convolutional Neural Network, CNN) or an AI model (Transformer) whose model training speed is increased by using an attention mechanism).

For example, AI may be used for beam management (beam management, BM), and the BM is mainly intended to discover a strongest transmit/receive beam pair (beam pair). AI/ML-based sparse beam prediction aims to improve accuracy of predicting an optimal beam. In a training phase, a network scans all possible beams, and then the network needs to notify UE of a transmit beam pattern. When model training is completed, the network needs to scan only a small part of beams, and then the UE feeds back the top K narrow beams (for example, K beams with best receive power) obtained through inference to the network.

For example, AI may also be used for positioning accuracy enhancement (Positioning accuracy enhancement). Specifically, a network uses reference UE (reference UE) controlled by an operator to collect raw data, and a location management function (Location Management Function, LMF) and a gNB separately train models. The LMF model may infer a final location (a longitude and latitude, or the like). The gNB model may infer a line-of-sight (line-of-sight, LOS) or non-line-of-sight (Non-Line-of-Sight, NLOS) determining result.

### 2. Model application environment

For different AI-based use cases, a UE side may be configured to perform different functions. For example, for a CSI feedback enhancement use case, the UE side may be configured to perform a CSI channel prediction function. For how to specifically implement a specific function, the UE may perform selection in a plurality of models that have a same function (that is, all can provide an output result required for the function). A selection manner may be configured by a network side, or the UE may autonomously perform selection based on internal implementation. The selection is usually based on a model application environment.

In the current discussion, typical model application environment classification includes the following several aspects: classification based on a macrophysical attribute of the UE, for example, a speed, a moving direction, a geographical location, or a height of the UE; classification based on a software or hardware attribute of the UE, for example, a state of charge, a computing capability, a storage space, or a compilation environment of a supported AI model of the UE; classification based on a channel environment of the UE, for example, an urban macro (Urban Marco) environment, an urban micro (Urban Micro) environment, or an indoor hotspot (Indoor Hotspot); classification based on a communication configuration between the UE and a base station, for example, a quantity of receive antennas of the UE or a quantity of transmit ports of the base station; and classification based on a time or frequency domain resource for air interface communication, for example, a carrier frequency, a subcarrier spacing, or a bandwidth.

In different model application environments, even models that can implement a same function may have different performance. Therefore, a most appropriate model usually needs to be selected based on an actual model application environment of the UE.

### 3. Minimization of drive tests (Minimization of Drive Tests, MDT)

The MDT includes immediate MDT (immediate MDT) and logged MDT (logged MDT). The immediate MDT is applicable to UE in a connected state. The logged MDT is applicable to the UE in an idle state and an inactive state.

For the immediate MDT, RAN measurement and UE measurement may be configured. The UE measurement is configured based on an existing RRC measurement process, and location information is extended to some extent. UE provides detailed location information (for example, global navigation satellite system (Global Navigation Satellite System) location information, GNSS) or the like during reporting.

For the logged MDT, a network initiates a logged MDT procedure to the UE in the connected state by sending a logged measurement configuration (LoggedMeasurementConfiguration) message. The message is used to transfer a configuration parameter of the logged MDT. In response to the message, the UE performs logging in a normal camping state based on a recorded measurement configuration. Further, when entering the connected state, the UE sends a logged MDT measurement available message by using an RRC configuration complete (RRCConfigurationComplete) message. During a MDT reporting period, if the UE does not transmit an entire log in an RRC message, indication information may be included in a UE information response (UEInformationResponse) message to indicate availability of remaining data.

A large amount of data needs to be collected for training of an AI model, and the UE in the connected state needs to perform multi-time and multi-sample recording and reporting. However, in the immediate MDT mechanism applicable to the UE in the connected state, the UE reports data to the network immediately upon collection. As a result, the UE cannot support multi-time and multi-sample recording, and frequent reporting of the UE increases signaling overheads.

In view of this, embodiments of this application provide a communication method and a communication apparatus, where a network device configures a data collection manner for a terminal device, so that the terminal device can implement multi-time and multi-sample recording and reporting for AI-related data collection.

In embodiments of this application, "indicate" includes "directly indicate" (also referred to as "explicitly indicate") and "implicitly indicate". Directly indicating information A means including the information A. Implicitly indicating information A means indicating the information A by using a correspondence between the information A and information B and directly indicating the information B. The correspondence between the information A and the information B may be predefined, prestored, pre-burned, or preconfigured.

In embodiments of this application, information C being used to determine information D includes the information D being determined only based on the information C, and also includes the information D being determined based on the information C and other information. In addition, the information C being used to determine the information D may also include an indirect determining case. For example, the information D is determined based on information E, and the information E is determined based on the information C.

In addition, "a network element A (which may be a device A) sends information A to a network element B (which may be a device B)" in embodiments of this application may be understood as that a destination end of the information A or an intermediate network element in a transmission path to the destination end is the network element B, and may include directly or indirectly sending the information to the network element B; and "the network element B receives the information A from the network element A" may be understood as that a source end of the information A or an intermediate network element in a transmission path to the source end is the network element A, and may include directly or indirectly receiving the information from the network element A. Necessary processing, for example, a format change, may be performed on the information when the information is sent between the source end and the destination end, but the destination end can understand valid information from the source end. Similar descriptions in this application may be understood similarly. Details are not described herein.

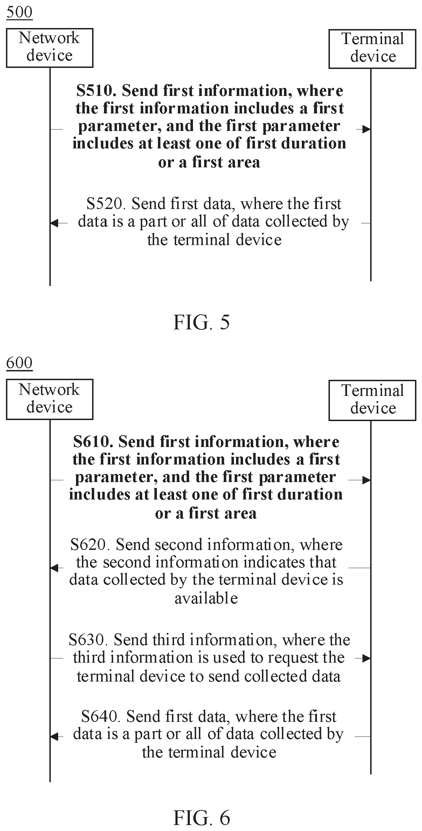

FIG. 5 is a schematic flowchart of a communication method 500 according to an embodiment of this application. The method 500 may be performed by a terminal device and a network device, or may be performed by modules and/or components (for example, chips or integrated circuits) installed in the terminal device and the network device and having corresponding functions. This is not limited. The following uses the terminal device and the network device as an example for description. As shown in FIG. 5, the method includes the following steps.

S510. The network device sends first information to the terminal device. Correspondingly, the terminal device receives the first information.

The first information indicates a first parameter, the first parameter includes at least one of first duration or a first area, the first duration is duration within which the terminal device is expected to collect data, and the first area is an area in which the terminal device is expected to collect data.

It should be understood that the first duration may be understood as a time within which the terminal device continuously collects data after receiving the first information.

For example rather than limitation, the first duration is 5s. To be specific, the network device expects the terminal device to collect data for 5s after receiving the first information.

For example rather than limitation, the first area includes an area #1 and an area #2. In this case, the network device expects the terminal device to collect data in the area #1 and the area #2.

It should be understood that the area may be a cell, a tracking area (Tracking Area, TA), or a geographical location range (for example, a longitude and latitude range). This is not limited in embodiments of this application.

In this embodiment of this application, an example in which the area is a cell is used for description. In other words, the first area may include one or more cells. The first area may include a plurality of consecutive cells, or the first area may include a plurality of non-consecutive cells. This is not limited in embodiments of this application.

For example rather than limitation, the first area includes a cell #1, a cell #2, and a cell #3, and the three cells are three consecutive cells.

For example rather than limitation, the first area includes a cell #1, a cell #2, and a cell #4, and the cell #2 and the cell #4 are not adjacent to each other.

For example rather than limitation, the first area includes a cell #1, a cell #3, and a cell #5, and any two of the three cells are not adjacent to each other.

It should be understood that when the first area includes a plurality of consecutive cells, the network device may indicate the first area by indicating a start cell and an end cell in the plurality of consecutive cells.

For example rather than limitation, when the first area includes the consecutive cell #1, cell #2, and cell #3, the network device may indicate the cell #1 and the cell #3 in the first parameter, to indicate the terminal device to collect data in the cell #1, the cell #2, and the cell #3.

It should be understood that a specific cell indication manner is not limited in embodiments of this application.

For example, the network device may indicate a cell in the first area by using a cell global identifier (Cell Global Identifier, CGI).

For example, the network device may indicate a cell in the first area by using a physical cell identifier (Physical Cell Identifier, PCI).

In a possible implementation, the first parameter further includes a first time interval, and the first time interval is a time interval at which the terminal device collects data.

It should be understood that when the first parameter includes the first duration and the first time interval, it indicates that the network device expects the terminal device to collect data based on the first time interval within the first duration.

For example rather than limitation, if the first duration is 10s, and the first time interval is 2s, it indicates that the network device expects the terminal device to collect data at the interval of 2s within the duration of 10s.

It should be understood that when the first parameter includes the first area and the first time interval, it indicates that the network device expects the terminal device to collect data based on the first time interval in the first area.

For example rather than limitation, if the first area includes a cell #1, and the first time interval is 5s, it indicates that the network device expects the terminal device to collect data at the time interval of 5s in the cell #1.

In another possible implementation, the first parameter further includes a first threshold, and the first threshold is an upper limit of a quantity of times of collecting data by the terminal device.

It should be understood that when the first parameter includes the first duration and the first threshold, it indicates that the network device expects the terminal device to collect data within the first duration for a quantity of times corresponding to the first threshold.

For example rather than limitation, if the first duration is 5s, and the first threshold is 5, it indicates that the network device expects the terminal device to collect data within 5s for five times.

It should be understood that a time interval at which the terminal device collects data within the first duration is not limited in embodiments of this application, provided that data can be collected for the quantity of times corresponding to the first threshold.

It should be understood that when the first parameter includes the first area and the first threshold, it indicates that the network device expects the terminal device to collect data in the first area for a quantity of times corresponding to the first threshold.

For example rather than limitation, when the first area includes an area #1, an area #2, and an area #3, and the first threshold is 3, it indicates that the network device expects the terminal device to collect data in the area #1, the area #2, and the area #3 for three times.

It should be understood that a specific operation of collecting data by the terminal device corresponds to a specific use case of an AI model that the network device expects to train. This is not limited in this application.

For example, the data collection performed by the terminal device may be that the terminal device collects reference signal received power (Reference Signal Received Power, RSRP), reference signal received quality (Reference Signal Received Quality, RSRQ), or a signal to interference plus noise ratio (Signal to Interference plus Noise Ratio, SINR).

For example, the data collection performed by the terminal device may alternatively be that the terminal device collects data related to an AI model, such as accuracy of the AI model, power consumption of executing the AI model by the terminal device, or complexity of the AI model, or collects a data set for AI model training, such as a training set and a test set.

It should be understood that content of data collection performed by the terminal device is not limited in embodiments of this application. For example, the content of data collection performed by the terminal device may include one or more of layer 1-reference signal received power (L1-Reference Signal Received Power, L1-RSRP), layer 3-reference signal received power (L3-RSRP), L1-reference signal received quality (Reference Signal Received Quality, RSRQ), an L1-signal to interference plus noise ratio (Signal to Interference plus Noise Ratio, SINR), a signal to interference plus noise ratio (SINR), a beam identifier (beam-ID), phase information of a reference signal, time information of the reference signal, power information of the reference signal, location information of data collection, or pairing information of time and power.

It should be understood that the content of collection performed by the terminal device may be indicated by using the first information, or may be indicated by using separate configuration information. This is not limited in embodiments of this application.

Optionally, the first parameter may further include a first signal threshold, and the first signal threshold includes at least one of a signal threshold of a current serving cell of the terminal device, a signal threshold of a neighboring cell, an SINR threshold, or an RSSI threshold.

For example, when the first signal threshold includes the signal threshold of the serving cell, it indicates that the network device expects the terminal device to collect data when a signal of the serving cell is lower than or higher than the signal threshold.

For example, when the first signal threshold includes the signal threshold of the neighboring cell, it indicates that the network device expects the terminal device to collect data when a signal of the neighboring cell is lower than or higher than the signal threshold.

For example, when the first signal threshold includes the signal threshold of the serving cell and the signal threshold of the neighboring cell, it indicates that the network device expects the terminal device to collect data when a signal of the serving cell of the terminal device is lower than or higher than the signal threshold of the serving cell and a signal of the neighboring cell is lower than or higher than the signal threshold of the neighboring cell.

For example, when the first signal threshold includes the SINR threshold, it indicates that the network device expects the terminal device to collect data when an SINR is lower than or higher than the threshold.

For example, when the first signal threshold includes the RSSI threshold, it indicates that the network device expects the terminal device to collect data when an RSSI is lower than or higher than the threshold.

It should be understood that the terminal device is in a connected state, that is, the terminal device may collect data based on the first parameter in the connected state.

It should be understood that the first information may be autonomously sent by the network device to the terminal device in a specific scenario, for example, automatically sent by the network device to the terminal device when the network device is reset. Alternatively, the first information may be sent by the network device based on a request of the terminal device. This is not limited in embodiments of this application.

Optionally, after requesting the network device to send the first information, the terminal device may start a timer. The timer may be configured by the terminal device, or may be configured by the network device. This is not limited in embodiments of this application. During running of the timer, the terminal device is prohibited from sending the request to the network device again. This helps to improve communication efficiency and reduce signaling overheads.

Optionally, before step S510, the network device may obtain a maximum data buffer size (buffer size) supported by the terminal device. A specific manner in which the network device obtains the maximum data buffer size supported by the terminal device is not limited in embodiments of this application.

For example, before sending the first information, the network device may send sixth information to the terminal device. The sixth information is used to request an upper limit of a data buffer size supported by the terminal device. Correspondingly, the terminal device may reply with seventh information. The seventh information indicates the upper limit of the data buffer size supported by the terminal device. The sixth information and the seventh information may be carried in RRC signaling.

For example, the network device may determine, based on capability information reported by the terminal device, the maximum data buffer size supported by the terminal device.

Optionally, the first information further includes first indication information, and the first indication information indicates the terminal device to collect data in an idle state or an inactive state based on the first parameter.

Optionally, the first parameter may further include a trigger condition for the terminal device to report data collected based on the first parameter. Alternatively, when the content of collection performed by the terminal device is indicated by using separate configuration information, the configuration information may further include the trigger condition for the terminal device to report data collected based on the first parameter.

In a possible implementation, the trigger condition includes one of a second threshold, a fourth threshold, and second duration, the second threshold is an upper limit of an amount of data obtained (or stored) by the terminal device through data collection based on the first parameter, the fourth threshold is a threshold of a difference between the amount of data collected by the terminal device based on the first parameter and the maximum data buffer size of the terminal device, and the second duration is maximum duration within which the terminal device collects data based on the first parameter.

It may be understood that when the difference between the amount of data obtained by the terminal device based on the first parameter and the maximum data buffer size of the terminal device is less than or equal to the fourth threshold, the terminal device may stop collecting data, or the terminal device may send third indication information to the network device.

The third indication information indicates that the data collected by the terminal device is available, or the third indication information indicates that the data buffer size of the terminal device is full or is about to be full. Correspondingly, the network device sends fourth indication information to the terminal device. The fourth indication information is used to request the terminal device to report data and/or indicates the terminal device to stop collecting data. After receiving the fourth indication information, the terminal device may report first data and/or stop collecting data.

It may be understood that the fourth threshold may be preconfigured, or may be configured by the network. This is not limited in embodiments of this application.

It is easy to understand that when the amount of data obtained by the terminal device based on the first parameter reaches the second threshold, the terminal device stops collecting data and reports data. A specific value of the second threshold is not limited in this application.

For example, the second threshold is 2000 bytes. To be specific, when the data amount of data collected based on the first parameter reaches 2000 bytes, the terminal device stops collecting data.

For example, the second threshold is a maximum packet data convergence protocol (Packet Data Convergence Protocol, PDCP) service data unit (service data unit, SDU) size, which is 9000 bytes in an NR system. To be specific, when the data amount of data collected based on the first parameter reaches the maximum PDCP SDU length, the terminal device stops collecting data.

In a possible implementation, when the second threshold is greater than the maximum data buffer size supported by the terminal device, the terminal device may stop collecting data when a difference between the amount of data obtained based on the first parameter and the maximum data buffer size is less than a third threshold. The third threshold may be preconfigured, or may be configured by the network device. This is not limited in embodiments of this application. For example, the third threshold may be 0, or may be a small data amount.

In this implementation, after the terminal device stops collecting data, the terminal device may directly report the first data in subsequent step S520, or may indicate, to the network device in subsequent step S620, that the data collected by the terminal device is available, and wait for the network device to indicate to report the first data. This is not limited in embodiments of this application.

In another possible implementation, when the second threshold is greater than the maximum data buffer size supported by the terminal device, the terminal device may send feedback information to the network device. The feedback information indicates the maximum data buffer size supported by the terminal device. Correspondingly, after receiving the feedback information, the network device may reconfigure a new second threshold for the terminal device, and the new second threshold is less than or equal to the maximum data buffer size supported by the terminal device.

It may be understood that, if the network device obtains, before sending the first information, the maximum data buffer size supported by the terminal device, the second threshold is less than or equal to the maximum data buffer size supported by the terminal device.

It is easy to understand that when the duration within which the terminal device collects data based on the first parameter reaches the second duration, the terminal device stops collecting data, and performs a subsequent step to report data.

It should be understood that a specific value of the second duration and a value relationship between the second duration and the first duration are not limited in embodiments of this application.

For example, if the second duration is greater than the first duration, after collecting data based on the first duration, the terminal device performs a subsequent step when the second duration expires.

For example, if the second duration is equal to the first duration, the terminal device performs a subsequent step immediately after collecting data based on the first duration.

In a possible implementation, the second duration may be indicated by using a first timer. A start moment of the first timer is not limited in embodiments of this application.

For example rather than limitation, the start moment of the first timer may be a moment at which the terminal device collects data by using the first parameter.

For example rather than limitation, the start moment of the first timer may be a moment at which the terminal device stores a data set collected based on the first parameter.

It should be understood that if the network device sends, before the second duration ends, request information to the terminal device to request data collected by the terminal device based on the first parameter, the terminal device may report, before the moment in response to the request information, the data collected based on the first parameter, instead of reporting the collected data after the second duration ends.

In some possible implementations, the first information may further include a reporting interval, and the reporting interval is an interval of time at which the terminal device is expected to report collected data. In other words, the terminal device may periodically report, to the network device based on the reporting interval, data collected based on the first parameter.

Optionally, the first information may further include a quantity of reporting times to indicate a quantity of times that the terminal device needs to collect data based on the first parameter and periodically report the data. When reporting data, the terminal device may report data collected based on the first parameter within a current reporting interval, or report all data collected based on the first parameter when the current reporting interval ends. This is not limited in embodiments of this application.

In a possible implementation, the first information may include one of the second threshold and the second duration, the reporting interval, and the quantity of reporting times. In other words, after the trigger condition is met, the terminal device may periodically report, to the network device, data collected based on the first parameter. Specifically, when the amount of the data obtained by the terminal device based on the first parameter reaches the second threshold, or when the duration within which the terminal device collects data based on the first parameter reaches the second duration, the terminal device periodically reports the collected data based on the reporting interval. For a specific implementation, refer to the foregoing descriptions. Details are not described herein again.

It should be understood that the first parameter may further include at least one of a height range and a speed range, that is, a height range or a speed range corresponding to data that the network device expects the terminal device to collect. Correspondingly, the terminal device collects data within the first range.

It should be understood that the height range may be understood as a height range within which the terminal device is located, that is, the network device expects the terminal device to collect data when the terminal device is within the height range.

It should be understood that the speed range may be understood as a range of a moving speed of the terminal device, that is, the network device expects the terminal device to collect data when the moving speed of the terminal device is within the speed range.

In another possible implementation, in step S510, the first parameter in the first information includes at least the first time interval and the content of data collection performed by the terminal device. For the first time interval and the content of data collection performed by the terminal device, refer to the foregoing related descriptions. Details are not described herein again. In other words, the terminal device may collect data only based on the first time interval and the content of data collection performed by the terminal device, to obtain the first data.

Optionally, the first parameter may further include one or more of the first area, the first threshold, the first duration, the first signal threshold, or the trigger condition for the terminal device to report data collected based on the first parameter. For specific descriptions of the parameters, refer to the foregoing related descriptions. Details are not described herein again.

S520. The terminal device sends the first data to the network device. Correspondingly, the network device receives the first data. The first data is a part or all of data collected by the terminal device based on the first parameter.

Specifically, the data collected by the terminal device based on the first parameter may include M data sets, the first data may include N of the M data sets, and M≥N≥1.

It should be understood that a specific manner in which the terminal device determines the first data is not limited in embodiments of this application.

For example rather than limitation, the first data may be determined by internal implementation of the terminal device. For example, the first data may be the first N of the M data sets collected by the terminal device. This is not limited in embodiments of this application.

In a possible implementation, if a data amount of the data collected by the terminal device based on the first parameter is greater than a maximum PDCP SDU size, the terminal device sends, in a segment reporting manner, the data collected based on the first parameter. Specifically, the terminal device sends an uplink dedicated information segmentation (ULDedicatedMessageSegment) message to the network device to start segmented transmission, and segments and transmits, based on the maximum PDCP SDU size, the data collected based on the first parameter.

For example rather than limitation, the terminal device divides the data collected based on the first parameter into a data segment #1, a data segment #2, and a data segment #3, and sends, to the network device, an RRC message #1 including the data segment #1, an RRC message #2 including the data segment #2, and an RRC message #3 including the data segment #3. In this implementation, the first data may be any one of the data segment #1, the data segment #2, and the data segment #3.

It should be understood that a quantity of data sets included in each data segment is not limited in embodiments of this application.

Optionally, before step S520, the method 500 may further include the following step:

S515. The network device sends second indication information to the terminal device. Correspondingly, the terminal device receives the second indication information. The second indication information indicates the terminal device to perform segmented transmission on the data collected based on the first parameter.

It should be understood that specific content of the first data is not limited in embodiments of this application.

For example rather than limitation, the first data may include at least one of the following: L1-RSRP, L3-RSRP, L1-RSRQ, an L1-SINR, a SINR, a beam-ID, phase information of a reference signal, time information of the reference signal, power information of the reference signal, location information of data collection, or pairing information of time and power.

Optionally, the first data may further include a second identifier, and the second identifier indicates line-of-sight (line-of-sight, LOS) transmission or non-line-of-sight (non-line-of-sight, LOS) transmission.

Optionally, the first data may further include a third identifier, and the third identifier indicates quality of a label of the first data. For example, in a positioning scenario, the label of the first data may be understood as an actual location of the terminal device. In this case, quality of the label of the first data is an accuracy degree of the actual location.

It should be understood that a specific form of sending the first data is not limited in embodiments of this application.

For example rather than limitation, the terminal device may include the reported content (that is, the first data) into a container (container). The container may be a container included in a measurement report or a UE information response.

For example rather than limitation, the terminal device may include the reported content (that is, the first data) into a measurement report or a UE information response, and indicate, by using a name, that the data is an L1 measurement result, for example, L1-RSRP or L1-RSRQ.

For example rather than limitation, the terminal device may include the reported content (that is, the first data) into a measurement report or a UE information response, indicate the first data by using a specific identifier (for example, L1-MeasQuantityResults), and expand, at a next level, specific content carried in the first data. An example of a specific form of the content

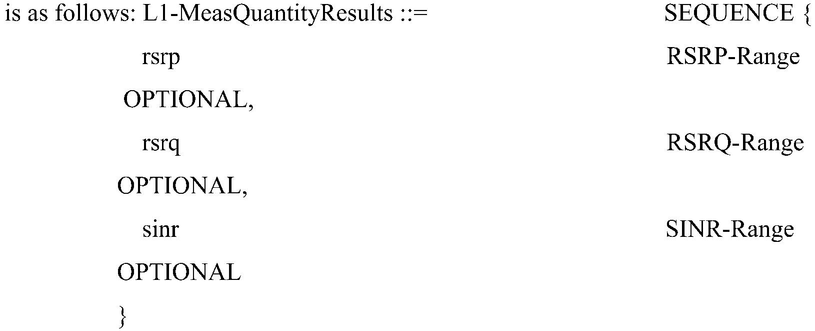

It should be understood that when the first data is included in the UE information response, the terminal device needs to report the UE information response as indicated by the network device. For example, the network device sends a UE information request to the terminal device, to request the terminal device to report the UE information response carrying the first data.

In this embodiment of this application, the network device may indicate the first parameter, so that the terminal device in the connected state can report the first data after completing data collection corresponding to the first parameter. Alternatively, the network device may indicate the first parameter and the reporting trigger condition, so that the terminal device in the connected state can report the first data when data collection corresponding to the first parameter is completed and the reporting trigger condition is met. According to the foregoing solution, the terminal device can implement multi-time and multi-sample recording and reporting for AI-related data collection.

FIG. 6 is a schematic flowchart of another communication method 600 according to an embodiment of this application. The method 600 may be performed by a terminal device and a network device, or may be performed by modules and/or components (for example, chips or integrated circuits) installed in the terminal device and the network device and having corresponding functions. This is not limited. The following uses the terminal device and the network device as an example for description. As shown in FIG. 6, the method includes the following steps.

S610. The network device sends first information to the terminal device. Correspondingly, the terminal device receives the first information.

For specific descriptions of the first information, refer to related content in FIG. 5. Details are not described herein again.

S620. The terminal device sends second information to the network device. Correspondingly, the network device receives the second information. The second information indicates that data collected by the terminal device is available.

In this embodiment of this application, the second information may indicate that data collected by the terminal device based on the first information is available, or the second information may indicate that data collected by the terminal device based on the first parameter is available.

In a possible implementation, the second information further indicates a data amount of the data collected by the terminal device based on the first parameter.

In another possible implementation, the data collected by the terminal device based on the first parameter includes M data sets, M≥1, the second information includes a second parameter, and the second parameter includes at least one of the following:
a time range corresponding to each of the M data sets, that is, a time range within which the terminal device collects each data set;
an area corresponding to each of the M data sets, that is, an area in which the terminal device collects each data set;
a height range corresponding to each of the M data sets, that is, a height range within which the terminal device collects each data set; or
a speed range corresponding to each of the M data sets, that is, a speed range within which the terminal device collects each data set.

S630. The network device sends third information to the terminal device. Correspondingly, the terminal device receives the third information. The third information is used to request the terminal device to send collected data.

In this embodiment of this application, the third information may indicate the terminal device to send data collected based on the first information, or the second information may indicate the terminal device to send data collected based on the first parameter.

In a possible manner, when the second information includes the second parameter, the third information further includes a first identifier, and the first identifier indicates a data set that the network device expects the terminal device to report. In this implementation, the third information is used to request the terminal device to report data based on the first identifier.

For example rather than limitation, the first identifier includes at least one of the following: an identifier of the data set that the terminal device is expected to report, an identifier of a collection area corresponding to the data set that the terminal device is expected to report, an identifier of a collection time range corresponding to the data set that the terminal device is expected to report, an identifier of a collection height range corresponding to the data set that the terminal device is expected to report, or an identifier of a data collection speed range corresponding to the data set that the terminal device is expected to report.

It should be understood that, in this implementation, the first data is all or a part of data indicated by the first identifier.

In another possible implementation, the third information includes a first condition, and the first condition includes one of the following: a collection time range corresponding to data expected to be reported, a collection area corresponding to the data expected to be reported, a height range corresponding to the data expected to be reported, a speed range corresponding to the data expected to be reported, and a data amount of the data expected to be reported.

It is easy to understand that, in this implementation, the second information may not include the second parameter.

It should be understood that, in this implementation, the first data is all or a part of data meeting the first condition.

S640. The terminal device sends the first data to the network device based on the third information. Correspondingly, the network device receives the first data.

It should be understood that specific content of the first data is not limited in embodiments of this application. For the specific content of the first data, refer to related descriptions of FIG. 5. Details are not described herein again.

In a possible implementation, the first data is all or a part of data indicated by the first identifier in the third information.

In another possible implementation, the first data is all or a part of data meeting the first condition in the third information.

It should be understood that when sending the first data based on the first identifier or the first condition, the terminal device may further report range information corresponding to each data set of the first data.

Table 1 is a data reporting format according to an embodiment of this application. As shown in Table 1, data reported by a terminal device may include a plurality of entries (entry), and each entry includes one or more data sets and range information corresponding to the one or more data sets. For example, an entry 1 includes a data set #1 and range information #1 corresponding to the data set #1, an entry 2 includes a data set #2, a data set #3, and range information #2 corresponding to the data set #2 and the data set #3, and an entry #3 includes the data set #3 and range information #3 corresponding to the data set #3.

**Table 1 Data reporting format**

| Data list | Content |
|---|---|
| Entry 1 | Data set #1 and range information #1 |
| Entry 2 | Data set #2, data set #3, and range information #2 |
| Entry 3 | Data set #4 and range information #3 |

The range information includes at least one of the following: a collection time range corresponding to each data set, a collection area corresponding to each data set, a height range corresponding to each data set, and a speed range corresponding to each data set.

For example rather than limitation, the first data reported by the terminal device includes three entries: An entry 1 includes a data set #1 and an identifier of a collection area #1 corresponding to the data set #1. An entry 2 includes a data set #2 and an identifier of a collection area #2 corresponding to the data set #2. An entry 3 includes a data set #3, a data set #4, and an identifier of a collection area #3 corresponding to the data set #3 and the data set #4.

For example rather than limitation, the first data reported by the terminal device includes two entries: An entry 1 includes a data set #5, an identifier of a collection area #1 corresponding to the data set #5, and an identifier of a height range #1 corresponding to the data set #5. An entry 2 includes a data set #6, an identifier of a collection area #2 corresponding to the data set #6, and an identifier of a height range #2 corresponding to the data set #6.

It should be understood that the terminal device may perform segmented transmission on the first data.

In a possible implementation, the terminal device may autonomously perform segmented transmission on the first data. Specifically, when a data amount of the first data is greater than a maximum PDCP SDU size, the terminal device may send the first data to the network device in a segmented transmission manner. For a specific manner, refer to related content in step S520. Details are not described herein again.

In another possible implementation, the terminal device may transmit the first data as indicated by the network device. In this implementation, before step S640, the method 600 further includes the following step (not shown in the figure):
S635. The network device sends second indication information to the terminal device. Correspondingly, the terminal device receives the second indication information. The second indication information indicates the terminal device to perform segmented transmission on collected data.

In this implementation, the terminal device may perform segmented transmission on the first data based on the second indication information and the third information. For a specific manner in which the terminal device performs segmented transmission, refer to related content in step S520. Details are not described herein again.

Optionally, the method 600 further includes the following step (not shown in the figure):
S645. The terminal device sends fourth information to the network device. Correspondingly, the network device receives the fourth information.

In a possible implementation, the fourth information indicates that data collected by the terminal device is available.

In another possible implementation, the fourth information indicates that second data is available, and the second data is all or a part of data other than the first data in the data collected by the terminal device.

In this embodiment of this application, the data collected by the terminal device may be data collected by the terminal device based on the first information, or data collected by the terminal device based on the first parameter.

It should be understood that the fourth information may further include a second parameter corresponding to each data set collected by the terminal device, or a second parameter corresponding to each data set other than the first data in the data collected by the terminal device. Details are not described herein again.

It should be understood that an occasion at which the terminal device sends the fourth information is not limited in embodiments of this application. In an example, the terminal device may send the fourth information when sending the first data. In another example, the terminal device may send the fourth information after sending the first data. This is not limited in embodiments of this application.

According to the foregoing solution, based on the method 500, the terminal device may send the second information to the network device, so that the network device determines that the data collected by the terminal device based on the first parameter is in an available state, and/or determines the second parameter of each data set in the data. Further, the network device may request the terminal device to send the data collected based on the first parameter, or may request the terminal device to send a specific data set in the data. According to the foregoing solution, the terminal device can implement multi-time and multi-sample recording and reporting for AI-related data collection.

It should be noted that the method 500 and the method 600 may be used as independent embodiments, or may be combined to form a new embodiment. This is not limited in embodiments of this application.

The following describes apparatus embodiments corresponding to the method embodiments of this application. The following merely briefly describes apparatuses. For specific implementation steps and details of the solutions, refer to the foregoing method embodiments.

To implement functions in the methods provided in this application, both the terminal device and the network device may include a hardware structure and/or a software module, to implement the functions in a form of the hardware structure, the software module, or a combination of the hardware structure and the software module. For the functions, whether a function is performed by using the hardware structure, the software module, or the combination of the hardware structure and the software module depends on particular application and design constraints of the technical solutions.

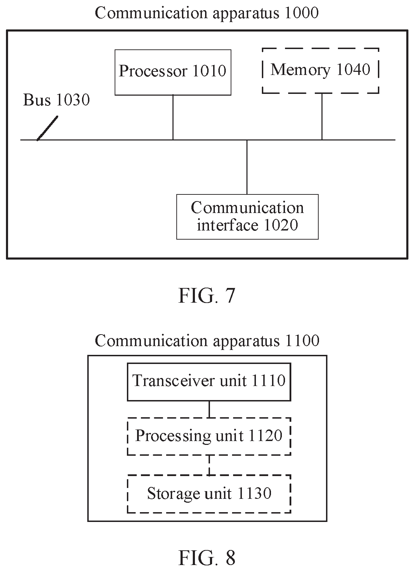

FIG. 7 is a block diagram of a communication apparatus 1000 according to an embodiment of this application. The communication apparatus 1000 includes a processor 1010 and a communication interface 1020. The processor 1010 and the communication interface 1020 may be connected to each other via a bus 1030. The communication apparatus 1000 may be a first device, or may be a second device.

Optionally, the communication apparatus 1000 may further include a memory 1040. The memory 1040 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1040 is used for related instructions and data.

The processor 1010 may be one or more central processing units (central processing units, CPUs). When the processor 1010 is one CPU, the CPU may be a single-core CPU, or may be a multi-core CPU. The processor 1010 may be a signal processor, a chip, or another integrated circuit that can implement the methods in this application, or may be a part of circuits configured to perform a processing function in the processor, chip, or integrated circuit. In addition, the communication interface 1020 may be an input/output interface, where the input/output interface is configured to input or output signals or data; or may be an input/output circuit.

When the communication apparatus 1000 is a terminal device, for example, the processor 1010 is configured to perform the following operations: receiving first information from a network device, sending first data, and the like.

When the communication apparatus 1000 is a network device, for example, the processor 1010 is configured to perform the following operations: sending first information to a terminal device, receiving first data, and the like.

The foregoing content is merely used as example descriptions. When the communication apparatus 1000 is a terminal device or a network device, the communication apparatus 1000 is responsible for performing methods or steps related to the terminal device or the network device in the foregoing method embodiments.

It may be understood that, when the communication apparatus 1000 is a terminal device or a network device, the communication interface 1020 may also be referred to as a transceiver. The foregoing descriptions are merely example descriptions. For specific content, refer to content shown in the foregoing method embodiments. For implementation of the operations in FIG. 7, refer to corresponding descriptions in the method embodiment shown in FIG. 5 or FIG. 6.

FIG. 8 is a block diagram of a communication apparatus 1100 according to an embodiment of this application. The communication apparatus 1100 may be a terminal device or a network device, or may be a chip or a module in the terminal device or the network device, configured to implement the methods in the foregoing embodiments. The communication apparatus 1100 includes a transceiver unit 1110. The following describes the transceiver unit 1110 for example.

The transceiver unit 1110 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. This applies throughout and is not repeated below.

When the communication apparatus 1100 is a network device, for example, the transceiver unit 1110 is configured to receive first information from a network device. The transceiver unit 1110 is further configured to send first data and the like.

Optionally, the communication apparatus 1100 may further include a processing unit 1120, configured to perform content related to steps such as processing and coordination of the terminal device.

When the communication apparatus 1100 is a network device, for example, the transceiver unit 1110 is configured to send first information to a terminal device. The transceiver unit 1110 is further configured to receive first data and the like.

Optionally, the communication apparatus 1100 may further include a processing unit 1120, configured to perform content related to steps such as processing and coordination of the second device.

The foregoing content is merely used as example descriptions. When the communication apparatus 1100 is a terminal device or a network device, the communication apparatus 1100 is responsible for performing methods or steps related to the terminal device or the network device in the foregoing method embodiments.

Optionally, the communication apparatus 1100 further includes a storage unit 1130. The storage unit 1130 is configured to store a program or code used to perform the foregoing methods.

The apparatus embodiments shown in FIG. 7 and FIG. 8 are used to implement the content described in FIG. 5 and FIG. 6. For specific execution steps and methods of the apparatuses shown in FIG. 7 and FIG. 8, refer to the content described in the foregoing method embodiments.

This application further provides a chip, including a processor, configured to invoke, from a memory, instructions stored in the memory and run the instructions, to enable a communication device on which the chip is installed to perform the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to couple to a memory, and perform the method and function related to the network device or the terminal device in any one of the foregoing embodiments.

Another embodiment of this application provides a computer program product including instructions. When the computer program product is run on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

Another embodiment of this application further provides a communication system. The communication system includes a terminal device and a network device. The terminal device is responsible for performing methods or steps related to the terminal device in the foregoing method embodiments. The network device is responsible for performing methods or steps related to the network device in the foregoing method embodiments.

A person of ordinary skill in the art may be aware that, in combination with units and algorithm steps in examples described in embodiments disclosed in this specification, this application can be implemented by electronic hardware or a combination of computer software and electronic hardware. Whether the functions are performed by hardware or software depends on particular application and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In several embodiments provided in this application, the disclosed system, apparatus, and method may be implemented in another manner. For example, the described apparatus embodiments are merely examples. For example, division into the units is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or other forms.

The units described as separate parts may or may not be physically separate, and parts displayed as units may or may not be physical units, that is, may be located in one place, or may be distributed on a plurality of network units. A part of or all the units may be selected based on an actual requirement to achieve objectives of the solutions of embodiments.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions of embodiments of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The storage medium includes any medium that can store program code, such as a USB flash drive, a removable hard disk drive, a ROM, a RAM, a magnetic disk, or an optical disc.

The foregoing descriptions are merely specific implementations of embodiments of this application, but are not intended to limit the protection scope of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, wherein the method is applied to a terminal device, and the method comprises:
receiving first information from a network device, wherein the first information comprises a first parameter, the first parameter comprises at least one of first duration or a first area, the first duration is duration within which the terminal device is expected to collect data, and the first area is an area in which the terminal device is expected to collect data; and
sending first data, wherein the first data is a part or all of data collected by the terminal device based on the first parameter.

2. The method according to claim 1, wherein the first data is data collected by the terminal device in a connected state.

3. The method according to claim 1 or 2, wherein the first parameter further comprises at least one of a first time interval or a first threshold, the first time interval is a time interval at which the terminal device collects data, and the first threshold is an upper limit of a quantity of times of collecting data by the terminal device.

4. The method according to any one of claims 1 to 3, wherein the first information further comprises at least one of a second threshold or second duration; and
the sending the first data comprises:
sending the first data when a data amount of the data collected by the terminal device based on the first parameter is greater than the second threshold; and/or
sending the first data when duration within which the terminal device collects data based on the first parameter is greater than the second duration.

5. The method according to any one of claims 1 to 4, wherein the first information further comprises a reporting interval and a quantity of reporting times, the reporting interval is an interval of time at which the terminal device is expected to report collected data, the quantity of reporting times is a quantity of times that the terminal device is expected to report collected data, and the sending the first data comprises:
sending, by the terminal device, the first data based on the reporting interval and the quantity of reporting times.

6. The method according to any one of claims 1 to 5, wherein the first parameter further comprises at least one of a height range or a speed range within which the terminal device is expected to collect data.

7. The method according to any one of claims 1 to 6, wherein before the sending the first data, the method further comprises:
sending second information, wherein the second information indicates that the data collected by the terminal device based on the first parameter is in an available state; and
receiving third information, wherein the third information is used to request the terminal device to send data collected based on the first parameter; and
the sending the first data comprises:
sending the first data based on the third information.

8. The method according to claim 7, wherein the second information further indicates the data amount of the data collected by the terminal device based on the first parameter; and/or
the data collected by the terminal device based on the first parameter comprises at least one data set, the second information further indicates a second parameter, and the second parameter comprises at least one of the following: a collection time range corresponding to each of the at least one data set, a collection area corresponding to each of the at least one data set, a collection height range corresponding to each of the at least one data set, or a collection speed range corresponding to each of the at least one data set.

9. The method according to claim 8, wherein the third information comprises a first identifier, and the first identifier indicates a data set that the terminal is expected to report.

10. The method according to claim 9, wherein the first identifier comprises at least one of the following:
an identifier of the data set that the terminal device is expected to report, an identifier of a collection area corresponding to the data set that the terminal device is expected to report, an identifier of a collection time range corresponding to the data set that the terminal device is expected to report, an identifier of a collection height range corresponding to the data set that the terminal device is expected to report, or an identifier of a collection speed range corresponding to the data set that the terminal device is expected to report.

11. The method according to claim 7, wherein the third information comprises a first condition, the first data is all or a part of data meeting the first condition in the data collected by the terminal device based on the first parameter, and the first condition comprises one of the following:
a collection time range corresponding to expected data, a collection area corresponding to the expected data, a height range corresponding to the expected data, or a speed range corresponding to the expected data.

12. The method according to any one of claims 1 to 11, wherein the method further comprises:
sending fourth information, wherein the fourth information indicates that second data is in an available state, and the second data is a part or all of data other than the first data in the data collected by the terminal device based on the first parameter.

13. The method according to any one of claims 1 to 11, wherein the first data comprises at least one of the following:
layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, pairing information of time and power, a second identifier, or a third identifier, wherein the second identifier indicates line-of-sight transmission or non-line-of-sight transmission, and the third identifier indicates quality of a label of the first data.

14. A communication method, wherein the method is applied to a network device, and the method comprises:
sending first information to a terminal device, wherein the first information comprises a first parameter, the first parameter comprises at least one of first duration or a first area, the first duration is duration within which the terminal device is expected to collect data, and the first area is an area in which the terminal device is expected to collect data; and
receiving first data, wherein the first data is a part or all of data collected by the terminal device based on the first parameter.

15. The method according to claim 14, wherein the first data is data collected by the terminal device in a connected state.

16. The method according to claim 14 or 15, wherein the first parameter further comprises at least one of a first time interval or a first threshold, the first time interval is a time interval at which the terminal device collects data, and the first threshold is an upper limit of a quantity of times of collecting data by the terminal device.

17. The method according to any one of claims 14 to 16, wherein the first information further comprises at least one of a second threshold or second duration, the second threshold is an upper limit of a data amount of the data collected by the terminal device based on the first parameter, and the second duration is maximum duration within which the terminal device collects data based on the first parameter.

18. The method according to any one of claims 14 to 17, wherein the first information further comprises a reporting interval and a quantity of reporting times, the reporting interval is an interval of time at which the terminal device is expected to report collected data, and the quantity of reporting times is a quantity of times that the terminal device is expected to report collected data.

19. The method according to any one of claims 14 to 18, wherein the first parameter further comprises at least one of a height range or a speed range within which the terminal device collects data.

20. The method according to any one of claims 14 to 19, wherein before the receiving the first data, the method further comprises:
receiving second information, wherein the second information indicates that the data collected by the terminal device based on the first parameter is in an available state; and
sending third information, wherein the third information is used to request the terminal device to send data collected based on the first parameter.

21. The method according to claim 20, wherein the second information further indicates the data amount of the data collected by the terminal device based on the first parameter; and/or
the data collected by the terminal device based on the first parameter comprises at least one data set, the second information further indicates a second parameter, and the second parameter comprises at least one of the following: a collection time range corresponding to each of the at least one data set, a collection area corresponding to each of the at least one data set, a collection height range corresponding to each of the at least one data set, or a collection speed range corresponding to each of the at least one data set.

22. The method according to claim 21, wherein the third information comprises a first identifier, and the first identifier indicates a data set that the terminal is expected to report.

23. The method according to claim 22, wherein the first identifier comprises at least one of the following:
an identifier of a length of the data set that the terminal device is expected to report, an identifier of a collection area corresponding to the data set that the terminal device is expected to report, an identifier of a collection time range corresponding to the data set that the terminal device is expected to report, an identifier of a collection height range corresponding to the data set that the terminal device is expected to report, or an identifier of a collection speed range corresponding to the data set that the terminal device is expected to report.

24. The method according to claim 20, wherein the third information comprises a first condition, the first data is all or a part of data meeting the first condition in the data collected by the terminal device based on the first parameter, and the first condition comprises one of the following:
a collection time range corresponding to expected data, a collection area corresponding to the expected data, a height range corresponding to the expected data, or a speed range corresponding to the expected data.

25. The method according to any one of claims 14 to 24, wherein the method further comprises:
receiving fourth information, wherein the fourth information indicates that second data is in an available state, and the second data is data other than the first data in the data collected by the terminal device based on the first parameter.

26. The method according to any one of claims 14 to 25, wherein the first data comprises at least one of the following:
layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, pairing information of time and power, a second identifier, or a third identifier, wherein the second identifier indicates line-of-sight transmission or non-line-of-sight transmission, and the third identifier indicates quality of a label of the first data.

27. A communication method, wherein the method is applied to a terminal device, and the method comprises:
receiving first information from a network device, wherein the first information comprises a first parameter, the first parameter comprises a first time interval and content of data collection performed by the terminal device, and the first time interval is a time interval at which the terminal device collects data; and
sending first data, wherein the first data is a part or all of data collected by the terminal device based on the first parameter.

28. The method according to claim 27, wherein the first data is data collected by the terminal device in a connected state.

29. The method according to claim 27 or 28, wherein the content of data collection performed by the terminal device comprises:
at least one of layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, or pairing information of time and power.

30. The method according to any one of claims 27 to 29, wherein the first parameter further comprises a first area and/or a first threshold, the first area is an area in which the terminal device is expected to collect data, and the first threshold is an upper limit of a quantity of times of collecting data by the terminal device.

31. The method according to any one of claims 27 to 30, wherein the first information further comprises at least one of a second threshold or second duration; and
the sending the first data comprises:
sending the first data when a data amount of the data collected by the terminal device based on the first parameter is greater than the second threshold; and/or
sending the first data when duration within which the terminal device collects data based on the first parameter is greater than the second duration.

32. The method according to claim 31, wherein when the second threshold is less than or equal to an upper limit of a data buffer size supported by the terminal device, the sending the first data comprises:
sending the first data when a difference between the data amount of the data collected by the terminal device based on the first parameter and the upper limit of the data buffer size supported by the terminal device is less than a third threshold; or
sending fifth information, wherein the fifth information indicates the upper limit of the data buffer size supported by the terminal device.

33. The method according to any one of claims 27 to 32, wherein the first information further comprises a reporting interval and a quantity of reporting times, the reporting interval is an interval of time at which the terminal device is expected to report collected data, the quantity of reporting times is a quantity of times that the terminal device is expected to report collected data, and the sending the first data comprises:
sending, by the terminal device, the first data based on the reporting interval and the quantity of reporting times.

34. The method according to any one of claims 27 to 33, wherein the first parameter further comprises at least one of a height range or a speed range within which the terminal device is expected to collect data.

35. The method according to any one of claims 27 to 34, wherein before the receiving the first information from the network device, the method further comprises:
receiving sixth information, wherein the sixth information is used to request the upper limit of the data buffer size supported by the terminal device; and
sending seventh information, wherein the seventh information indicates the upper limit of the data buffer size supported by the terminal device.

36. The method according to any one of claims 27 to 35, wherein before the sending the first data, the method further comprises:
sending second information, wherein the second information indicates that the data collected by the terminal device based on the first parameter is in an available state; and
receiving third information, wherein the third information is used to request the terminal device to send data collected based on the first parameter; and
the sending the first data comprises:
sending the first data based on the third information.

37. The method according to claim 36, wherein the second information further indicates the data amount of the data collected by the terminal device based on the first parameter; and/or
the data collected by the terminal device based on the first parameter comprises at least one data set, the second information further indicates a second parameter, and the second parameter comprises at least one of the following: a collection time range corresponding to each of the at least one data set, a collection area corresponding to each of the at least one data set, a collection height range corresponding to each of the at least one data set, or a collection speed range corresponding to each of the at least one data set.

38. The method according to claim 36, wherein the third information comprises a first identifier, and the first identifier indicates a data set that the terminal is expected to report.

39. The method according to claim 38, wherein the first identifier comprises at least one of the following:
an identifier of the data set that the terminal device is expected to report, an identifier of a collection area corresponding to the data set that the terminal device is expected to report, an identifier of a collection time range corresponding to the data set that the terminal device is expected to report, an identifier of a collection height range corresponding to the data set that the terminal device is expected to report, or an identifier of a collection speed range corresponding to the data set that the terminal device is expected to report.

40. The method according to claim 36, wherein the third information comprises a first condition, the first data is all or a part of data meeting the first condition in the data collected by the terminal device based on the first parameter, and the first condition comprises one of the following:
a collection time range corresponding to expected data, a collection area corresponding to the expected data, a height range corresponding to the expected data, or a speed range corresponding to the expected data.

41. The method according to any one of claims 27 to 40, wherein the method further comprises:
sending fourth information, wherein the fourth information indicates that second data is in an available state, and the second data is a part or all of data other than the first data in the data collected by the terminal device based on the first parameter.

42. The method according to any one of claims 27 to 41, wherein the first data comprises at least one of the following:
layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, pairing information of time and power, a second identifier, or a third identifier, wherein the second identifier indicates line-of-sight transmission or non-line-of-sight transmission, and the third identifier indicates quality of a label of the first data.

43. A communication method, wherein the method is applied to a network device, and the method comprises:
sending first information to a terminal device, wherein the first information comprises a first parameter, the first parameter comprises a first time interval and content of data collection performed by the terminal device, and the first time interval is a time interval at which the terminal device collects data; and
receiving first data, wherein the first data is a part or all of data collected by the terminal device based on the first parameter.

44. The method according to claim 43, wherein the first data is data collected by the terminal device in a connected state.

45. The method according to claim 43 or 44, wherein the content of data collection performed by the terminal device comprises:
at least one of layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, or pairing information of time and power.

46. The method according to any one of claims 43 to 45, wherein the first parameter further comprises a first area and/or a first threshold, the first area is an area in which the terminal device is expected to collect data, and the first threshold is an upper limit of a quantity of times of collecting data by the terminal device.

47. The method according to any one of claims 43 to 46, wherein the first information further comprises at least one of a second threshold or second duration, the second threshold is an upper limit of a data amount of the data collected by the terminal device based on the first parameter, and the second duration is maximum duration within which the terminal device collects data based on the first parameter.

48. The method according to claim 43, wherein before the sending the first information, the method further comprises:
obtaining an upper limit of a data buffer size supported by the terminal device; and
determining the second threshold, wherein the second threshold is less than or equal to the upper limit of the data buffer size supported by the terminal device.

49. The method according to any one of claims 43 to 48, wherein the first parameter further comprises at least one of a height range or a speed range within which the terminal device collects data.

50. The method according to any one of claims 43 to 49, wherein before the receiving the first data, the method further comprises:
receiving second information, wherein the second information indicates that the data collected by the terminal device based on the first parameter is in an available state; and
sending third information, wherein the third information is used to request the terminal device to send data collected based on the first parameter.

51. The method according to claim 50, wherein the second information further indicates the data amount of the data collected by the terminal device based on the first parameter; and/or
the data collected by the terminal device based on the first parameter comprises at least one data set, the second information further indicates a second parameter, and the second parameter comprises at least one of the following: a collection time range corresponding to each of the at least one data set, a collection area corresponding to each of the at least one data set, a collection height range corresponding to each of the at least one data set, or a collection speed range corresponding to each of the at least one data set.

52. The method according to claim 50, wherein the third information comprises a first identifier, and the first identifier indicates a data set that the terminal is expected to report.

53. The method according to claim 52, wherein the first identifier comprises at least one of the following:
an identifier of a length of the data set that the terminal device is expected to report, an identifier of a collection area corresponding to the data set that the terminal device is expected to report, an identifier of a collection time range corresponding to the data set that the terminal device is expected to report, an identifier of a collection height range corresponding to the data set that the terminal device is expected to report, or an identifier of a collection speed range corresponding to the data set that the terminal device is expected to report.

54. The method according to claim 50, wherein the third information comprises a first condition, the first data is all or a part of data meeting the first condition in the data collected by the terminal device based on the first parameter, and the first condition comprises one of the following:
a collection time range corresponding to expected data, a collection area corresponding to the expected data, a height range corresponding to the expected data, or a speed range corresponding to the expected data.

55. The method according to any one of claims 43 to 54, wherein the method further comprises:
receiving fourth information, wherein the fourth information indicates that second data is in an available state, and the second data is data other than the first data in the data collected by the terminal device based on the first parameter.

56. The method according to any one of claims 43 to 55, wherein the first data comprises at least one of the following:
layer 1-reference signal received power, layer 3-reference signal received power, layer 1-reference signal received quality, a signal to interference plus noise ratio, a beam identifier, phase information of a reference signal, time information of the reference signal, power information of the reference signal, location information of data collection, pairing information of time and power, a second identifier, or a third identifier, wherein the second identifier indicates line-of-sight transmission or non-line-of-sight transmission, and the third identifier indicates quality of a label of the first data.

57. A communication apparatus, configured to implement the method according to any one of claims 1 to 13, the method according to any one of claims 14 to 26, the method according to any one of claims 27 to 42, or the method according to any one of claims 43 to 56.

58. A communication apparatus, comprising a processor, wherein the processor is, by executing a computer program or instructions or using a logic circuit, configured to:
enable the communication apparatus to perform the method according to any one of claims 1 to 13, or
enable the communication apparatus to perform the method according to any one of claims 14 to 26, or
enable the communication apparatus to perform the method according to any one of claims 27 to 42, or
enable the communication apparatus to perform the method according to any one of claims 43 to 56.

59. The apparatus according to claim 58, wherein the communication apparatus further comprises a memory, and the memory is configured to store the computer program or the instructions.

60. The apparatus according to claim 58 or 59, wherein the communication apparatus further comprises a communication interface, and the communication interface is configured to input and/or output signals.

61. A computer-readable storage medium, wherein the computer-readable storage medium stores a computer program or instructions, and when the computer program or the instructions are run on a computer,
the method according to any one of claims 1 to 13 is performed, or
the method according to any one of claims 14 to 26 is performed, or
the method according to any one of claims 27 to 42 is performed, or
the method according to any one of claims 43 to 56 is performed.

62. A computer program product, comprising instructions, wherein when the instructions are run on a computer,
the method according to any one of claims 1 to 13 is performed, or
the method according to any one of claims 14 to 26 is performed, or
the method according to any one of claims 27 to 42 is performed, or
the method according to any one of claims 43 to 56 is performed.

63. A communication system, comprising a terminal device and a network device, wherein
the terminal device is configured to perform the method according to any one of claims 1 to 13 or the method according to any one of claims 27 to 42; and
the network device is configured to perform the method according to any one of claims 14 to 26 or the method according to any one of claims 43 to 56.
